(19)

Europäisches
Patentamt
European
Patent Office
Office européen
des brevets

(11) **EP 2 302 098 A1**

(12) **EUROPEAN PATENT APPLICATION**
published in accordance with Art. 153(4) EPC

(43) Date of publication:
**30.03.2011 Bulletin 2011/13**

(51) Int Cl.:
***C23C 22/34*** *(2006.01)*

(21) Application number: **09773439.6**

(86) International application number:
**PCT/JP2009/061859**

(22) Date of filing: **29.06.2009**

(87) International publication number:
**WO 2010/001861 (07.01.2010 Gazette 2010/01)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **01.07.2008 JP 2008172616**

(71) Applicant: **Henkel AG & Co. KGaA
40589 Düsseldorf (DE)**

(72) Inventors:
• **YOSHIDA Masayuki
Tokyo 103-0027 (JP)**
• **NAGASHIMA Yasuhiko
Tokyo 103-0027 (JP)**
• **KAWAGOSHI Ryosuke
Tokyo 103-0027 (JP)**

(54) **CHEMICAL CONVERSION LIQUID FOR METAL STRUCTURE AND SURFACE TREATING METHOD**

(57)     The present invention provides a chemical conversion solution and the surface treating method for realizing high corrosion resistance and high coating adhesion of the metal surface, as well as high throwing power during electrodeposition, and generating no sludge.
A chemical conversion solution comprising (A) at least one compound selected from water-soluble germanium compound, water-soluble tin compound, and water-soluble copper compound, (B) at least one compound selected from water-soluble titanium compound and water-soluble zirconium compound, (C) at least one water-soluble nitrate compound,(D) at least one compound selected from water-soluble aluminum compound and water-soluble magnesium compound, (E) at least one water-soluble zinc compound, and (F) at least one fluorine compound, and, the coating process for the metal structure.

【Fig. 1】

EP 2 302 098 A1

**Description**

BACKGROUND OF THE INVENTION

This invention relates to a novel chemical conversion solution for a metal surface, and in particular, for a surface of a metal structure which provides excellent corrosion resistance and improved coating adhesion to the metal surface. This invention also relates to a novel surface treating method for a metal structure.

Chemical conversion for the purpose of improving the corrosion resistance and coating adhesion of a metal has been known in the art for a long time. The most popular chemical conversion is phosphate treatment using an acidic aqueous solution of phosphoric acid. In the case of most common metal material, namely, steel material, surface of the metal material is etched (corroded) when the metal material is brought in contact with the phosphoric acid, and as a consequence of the consumption of the phosphoric acid, pH increases at the solid-liquid boundary, and this results in the deposition of the insoluble phosphate on the surface of the steel material. By adding zinc, manganese, or the like to the surface treatment solution, a crystalline salt such as zinc phosphate or manganese phosphate can be deposited on the surface. Such phosphate film is adequate as a primer coating for the subsequent coating since it has various excellent effects such as improvement of the coating adhesion, provision of the resistance to the corrosion under the coating, and great improvement in the corrosion resistance.

Phosphate treatment itself has been used in the art for almost a hundred years, and various improvements have been proposed during this period. However, since it etches the steel material, iron dissolves as a byproduct of the chemical conversion reaction. This iron is precipitated in the reaction system as iron phosphate, and the iron phosphate precipitate should be periodically discharged from the reaction system. This precipitate is generally called sludge, and at present, this sludge is either thrown away as an industrial waste or reused as one source for producing tiles and the like. Recently, reduction of the industrial waste has become a great agenda in view of global environment, and under such situation, the chemical conversion solution and the surface treating method which produce no waste is highly demanded.

Chromate chemical conversion is also a popular chemical conversion treatment. The chromate chemical conversion using chromic acid has long history in the industry, and this treatment is still widely used in the surface treatment of aircraft materials, building materials, and automobile parts. The chromate chemical conversion solution contains chromic acid containing hexavalent chromium as its main component, and therefore, it forms a chemical conversion film containing hexavalent chromium as its part on the surface of metal material. While the chromate chemical conversion film has excellent corrosion resistance and coating adhesion, it contains the harmful hexavalent chromium, and accordingly, there is a strong demands for a chemical conversion solution and a chemical conversion film free from the environmentally harmful hexavalent chromium.

In the meanwhile, the metal structure of a transportation vehicle such as an automobile is subjected to electrodeposition to impart anti-corrosive property with the material. In this case, it has been global practice to conduct the electrodeposition after the chemical conversion of the metal structure without drying. Electrodeposition is a method which is capable of forming a relatively consistent coating having uniform coating thickness since the electrodeposition paint is deposited through electrolysis, and this method is well adapted for coating various structures. However, in the case of a structure having a complicated shape as in the case of an automobile body or its part, amount of the electric current will be less in some parts because of the structure, and in the case of a structure having a pocket structure, coating thickness will be different in the exterior and interior surfaces. The ability of forming a consistent coating is generally called throwing power during the electrodeposition, and a solution and a method realizing a high throwing power during the electrodeposition is awaited.

Various inventions have been proposed for the improvement of throwing power during the electrodeposition. For example, JP 2004-083824 A discloses a method for forming a coating by electrodeposition. This method uses a coating composition for cationic electrodeposition containing a base resin comprising an alkylphenol and an amine adduct epoxy resin (I) modified with polycaprolactone, and a curing component comprising blocked polyisocyanate curing agent (II), and the electrodeposition is conducted under the conditions wherein polarization resistance (a) per unit coating thickness of the coating during the electrodeposition of the subject to be coated having a pocket structure is 125 to 150 kΩ·cm$^2$/μm, and coating weight (b) per unit electricity is 28 to 50 mg/C to thereby form a coating wherein the throwing power represented by the ratio of exterior and interior coating thickness (c) is such that the interior coating thickness is 10 μm and the exterior coating thickness is 10 to 12 μm, with the ratio of the interior coating thickness to the exterior coating thickness being 10 / 10 to 12. JP 2004-083824 A also discloses a coating composition for cationic electrodeposition for use with this method and an article coated by this method.

JP 2004-269942 A discloses a method for improving the throwing power in the cationic electrodeposition wherein the electrodeposition is carried out by using an electrodeposition paint and adjusting coating properties during the electrodeposition to the following parameters:

(a) electric conductivity of the electrodeposition paint of at least 0.16 S/m,
(b) electric conductivity of the coating of up to 1.0 x 10<sup>-7</sup> S/m,
(c) electricity not contributing for the deposition of up to 320 coulomb/m$^2$, and
(d) electrochemical equivalence of at least 1.0 x 10$^{-4}$ kg/coulomb,

As described above, insufficient throwing power during the electrodeposition has been a serious problem in the case of complicated structure such as automobile body. However, conventional approach for solving this problem has been exclusively from the side of the coating such as improvement of the electrodeposition paint and improvement of the electrodeposition conditions. Use of the phosphate generally realized a relatively high throwing power during the electrodeposition, and in employing an alternative technique, it would be important to realize a throwing power during the electrodeposition equivalent to or higher than the throwing power realized by the phosphate, and preferably, improvement of the throwing power by the approach from side of the surface treatment, namely, from the side of the chemical conversion film is desired.

Besides the phosphate treatment, numerous chemical conversion solutions and surface treating methods not using the hexavalent chromium have been proposed. Not many, however, have been used in the commercial production. Some of these inventions are described in the following.

A typical example of the non-chromate type chemical conversion solution containing no chromium at all is the chemical conversion solution disclosed in JP 52-131937 A. This chemical conversion solution is an acidic coating composition having a pH of about 1.5 to 4.0 containing zirconium, titanium, or its mixture with phosphoric acid and a fluoride. When a metal surface is treated with this chemical conversion solution, a chemical conversion film containing oxide of zirconium or titanium as its main component is formed on the metal surface. This non-chromate type chemical conversion solution has the merit that it does not contain the hexavalent chromium, and it has been widely employed in producing aluminum D & I cans for beer and other beverages. This is a classical technique which falls within the category of non-chromium chemical conversion solution commonly referred to as the "zirconium or titanium non-chromium chemical conversion solution".

The treatment method disclosed in JP 57-41376A is a surface treating method wherein a surface of aluminum, magnesium, or an alloy thereof is treated with an aqueous solution containing at least one member selected from titanium salt and zirconium salt, at least one member selected from imidazole derivatives, and an oxidizing agent such as nitric acid, hydrogen peroxide, or potassium permanganate. The oxidizing agent promotes deposition of the titanium or zirconium. This solution is within the category of non-chromium chemical conversion solution called "zirconium or titanium solution.

Further examples of the non-chromate type treating solution are the following solutions. JP 56-136978A discloses a chemical conversion solution comprising an aqueous solution containing vanadium compound and at least one compound selected from the group consisting of titanium salt, zirconium salt, and zinc salt. This solution is a combination of the zirconium or the titanium non-chromium chemical conversion solution as mentioned above with the vanadium.

JP 2000-199077A discloses an acidic metal surface treating solution containing a metal acetylacetonate and at least one compound selected from water-soluble inorganic titanium compound and water-soluble inorganic zirconium compound. The metal acetate used in this solution is vanadyl acetate, zirconium acetate, zinc acetate, or the like, and this solution is a combination of the zirconium or the titanium non-chromium chemical conversion solution as mentioned above with the metal acetate.

JP 11-36082A proposes a surface treating solution for a light metal or a light alloy material comprising 0.01 to 50 g/l of permanganic acid or its salt and 0.01 to 20 g/l of at least one compound selected from water-soluble titanium compound and water-soluble zirconium compound, and which has a pH of 1.0 to 7.0. This solution is within the category of non-chromium chemical conversion solution called manganese-titanium or manganese-zirconium solution.

JP 2004-232047A discloses a chemical conversion agent for forming a highly corrosion resistant chromium-free film adapted for use with aluminum or an aluminum alloy, comprising hexacyano acid ion and at least one metal ion selected from the group consisting of Ti, V, Mn, Fe, Co, Zr, Mo, and W. The elements indicated other than cobalt are those mentioned in the prior art document as mentioned above.

JP 2001-247977A proposes a chromium-free composition for metal surface treatment wherein the film formed by the metal surface treatment contains a plurality of metal elements at least one of which is multi-valent. More specifically, in this metal surface treating composition, at least two members selected from Mg, Al, Ti, V, Mn, Fe, Co, Ni, Cu, Zn, Sr, Nb, Y, Zr, Mo, In, Sn, Ta, and W are used for the metal element. This composition can be understood as a scope within zirconium, titanium, vanadium, tungsten, molybdenum, or manganese non-chromium chemical conversion solution.

WO 03/074761A1 proposes a surface treating composition for aluminum, an aluminum alloy, magnesium, or a magnesium alloy containing (1) compound A containing at least one metal element selected from Hf(IV), Ti(IV), and Zr(IV), (2) a fluorine-containing compound at an amount sufficient for the presence of fluoride at a concentration 5 times higher than the total molar concentration of the metal in the compound A, (3) at least one metal ion B selected from alkaline earth metal, (4) at least one metal ion C selected from Al, Zn, Mg, Mn, and Cu, and (5) nitrate ion. In broad sense, this solution is also a scope within the zirconium or titanium non-chromium chemical conversion solution.

JP 2003-313679A proposes a non-chromium metal surface treating method comprising the steps of (A) treating the subject to be treated with a non-chromium metal surface treating agent comprising a water-soluble zirconium compound and/or a water-soluble titanium compound (1) and an organic phosphonic acid compound (2); and (B) treating the subject which had been treated by the step (A) with an aqueous solution of tannin (3); wherein content of the water-soluble zirconium compound and/or the water-soluble titanium compound (1) is 40 to 1000 ppm by weight in terms of the amount of the zirconium and/or titanium, content of the organic phosphonic acid compound (2) is 20 to 500 ppm by weight, and the non-chromium metal surface treating solution has a pH of 1.6 to 4.0, and content of the tannin (3) in the aqueous solution is 400 to 10000 ppm by weight. In broad sense, this solution is also a scope within the zirconium or titanium non-chromium chemical conversion solution.

JP 2003-313681A proposes a non-chromium metal surface treating method comprising the steps of (A) treating the subject to be treated with a non-chromium metal surface treating agent comprising a water-soluble zirconium compound and/or a water-soluble titanium compound (1) and an organic phosphonic acid compound (2); and (B) treating the subject which had been treated by the step (A) with an aqueous solution of tannin (3); wherein the organic phosphonic acid compound (2) is a compound wherein the phosphorus atom constituting the phosphonic group is bonded to carbon atom, content of the water-soluble zirconium compound and/or the water-soluble titanium compound (1) is 20 to 800 ppm by weight in terms of the amount of the zirconium and/or titanium, content of the organic phosphonic acid compound (2) is 10 to 500 ppm by weight, the aqueous solution of tannin (3) has a concentration of 300 to 8000 ppm by weight, and the non-chromium metal surface treating solution has a pH of 1.6 to 4.0, and the solution is used for the production of a metal plate covered by a thermoplastic polyester resin. As the prior art documents as mentioned above, in broad sense, this solution is also a scope within a zirconium or titanium non-chromium chemical conversion solution.

JP 2003-171778A discloses a treating solution which is an aqueous acidic liquid composition containing (A) at least one member selected from the group consisting of Ti, V, Mn, Y, Zr, Nb, Mo, Tc, Ru, Rh, Pd, and W, (B) at least one member selected from an organic acid and/or an inorganic acid and/or a salt thereof, and (C) fluorine as an optional component, wherein the aqueous acidic liquid composition contains at least one member selected from trivalent chromium, Ti, V, Mn, Y, Zr, Nb, Mo, Tc, Ru, Rh, Pd, W, Li, Na, K, Be, Mg, Ca, Al, Fe, Ni, Co, Si, Sr, In, Ag, Zn, Cu, Sc, organic acid, inorganic acid, organic acid salt, inorganic acid salt, amino acid, amino acid salt, fluorine, amine, alcohol, water-soluble polymer, surfactant, silane coupling agent, carbon powder, dye, pigment, organic colloid, and inorganic colloid. As the prior art documents as mentioned above, this solution is a scope within a zirconium and/or titanium non-chromium chemical conversion solution.

JP 2004-218070A discloses a pretreatment method to be conducted before the coating comprising the step of treating the subject to be treated with a chemical conversion solution to form a chemical conversion film, wherein the chemical conversion solution contains at least one member selected from zirconium, titanium, and hafnium; fluorine; and at least one member selected from amino group-containing silane coupling agent and its hydrolysate and polymerization products thereof. As in the case of the prior art documents as mentioned above, this solution is a scope within a zirconium and/or titanium non-chromium chemical conversion solution, and this solution also includes a silane coupling agent which is known in the art.

JP 2004-218073A proposes a chemical conversion solution comprising at least one member selected from zirconium, titanium, and hafnium; fluorine; and an agent for improving adhesion and corrosion resistance, wherein the agent for improving adhesion and corrosion resistance is at least one member selected from the group consisting of 1 to 5000 ppm (in terms of the metal ion concentration) of at least one metal ion (A) selected from zinc, manganese, and cobalt ions; 1 to 5000 ppm (in terms of the metal ion concentration) of an alkaline earth metal ion (B); 1 to 1000 ppm (in terms of the metal ion concentration) of a Group III metal ion (C); 0.5 to 100 ppm (in terms of the metal ion concentration) of copper ion (D); and 1 to 5000 ppm (in terms of the silicon component) of a silicon-containing compound (E). As in the case of the prior art documents as mentioned above, this solution is a scope within a zirconium and/or titanium non-chromium chemical conversion solution, and this solution also includes components such as zinc ion or the like, alkaline earth metal ion, Group III metal ion (which is described to be preferably aluminum), copper ion or the like, and silicon-containing compound as the an agent for improving adhesion.

JP 2004-218075A proposes a chemical conversion solution comprising at least one member selected from zirconium, titanium, and hafnium; fluorine; an agent for improving adhesion; and an agent for promoting the chemical conversion reaction, wherein the agent for improving adhesion is at least one member selected from a metal ion such as zinc, a silicon-containing compound, a water-soluble resin having amino group and at least having $-(-CH_2-CHNH_2-)-$ or $-(-CH_2-CHCH_2NH_2-)-$ as a constitutional unit, epoxy compound, and silane coupling agent; and the agent for promoting the chemical conversion reaction is at least one member selected from the group consisting of nitrous ion, nitro group-containing compound, organic acid, and the like incorporated at an amount of 1 to 5000 ppm. As the prior art documents as mentioned above, this solution is a scope within a zirconium and/or titanium non-chromium chemical conversion solution. However, this solution also includes an organic compound, and in this sense, this solution is more relevant with the resin and metal non-chromium chemical conversion solutions as described below.

In the meanwhile, JP 61-91369A, JP 1-172406A, JP 1-177379A, JP 1-177380A, JP 2-608A, JP 2-609A, and JP 2771110 B disclose chemical conversion solutions and chemical conversion methods which involve use of a water-soluble resin for the purpose of providing corrosion resistance and coating adhesion with an aluminum-containing metal material or the like. In these conventional chemical conversion solutions and chemical conversion methods, the metal surface is treated by a solution containing a derivative of a polyhydric phenol compound, and these fall within the category called resin or resin metal composite non-chromium chemical conversion solutions.

JP 2001-303267A proposes a non-chromium chemical conversion rust-preventive solution for aluminum containing a zirconium compound, fluorine ion, a water-soluble resin, and an aluminum salt, wherein the zirconium compound is included at a concentration in terms of the zirconium ion of 100 to 100000 ppm, the fluorine ion is included at a concentration of 125 to 125000 ppm, the water-soluble resin is included at 100 to 100000 ppm in terms of the concentration of the non-volatile content, and the aluminum salt is included at a concentration in terms of the aluminum ion of 10 to 10000 ppm. This solution is also a non-chromium chemical conversion solution which is a combination of the resin and the zirconium solutions.

Chemical conversion solutions which are not totally free from chromium but the one containing not the harmful hexavalent chromium but trivalent chromium have also been proposed. JP 3333611 B proposes a hexavalent chromium-free chemical conversion solution for aluminum and aluminum alloys containing acid ion (A) containing a phosphor-containing acid group, at least one ion (B) selected from trivalent chromium ion and ion of a compound containing the trivalent chromium, and at least one fluorine compound (C) selected from fluoride and complex fluoride. This solution falls within the category of trivalent chromium chemical conversion solution.

JP 2000-332575A proposes a chemical conversion solution which is used after treating a substrate comprising aluminum or an aluminum alloy with an acidic aqueous solution at 10 to 70°C for 5 seconds to 5 minutes, wherein the acidic aqueous solution is an acidic aqueous solution at a pH of up to 2 containing (a) at least one member selected from the group consisting of a salt or an acid salt of a metal selected from Fe, Ni, Co, Mo, and Ce at a concentration in the acidic aqueous solution of 0.01 to 5% by weight, (b) an inorganic acid; and the chemical conversion solution comprises (c) Zr and/or Ti at a concentration in the chemical conversion solution of 0.001 to 1 % by mass, (d) trivalent chromium ion or its salt at a concentration in the chemical conversion solution of 0.1 to 1000 ppm, and (e) a fluoride. As in the case of JP 3333611 B, this solution also falls within the category of the trivalent chromium chemical conversion solution.

JP 2004-010937A proposes a method for forming a colored rust-preventive film on a metal in which a rust-preventive film is formed by using a liquid composition containing (A) trivalent chromium ion, (B) at least one member selected from Mo, W, Ti, Zr, Mn, Tc, Fe, Ru, Co, alkaline earth metal, Ni, Pd, Pt, Sc, Y, V, Nb, Ta, Cu, Ag, and Au, (C) at least one member selected from chlorine, fluorine, sulfate ion, and nitrate ion, and (D) at least one member selected from oxyacid, oxysalt, and anhydride of phosphor and phosphorus compound. As in the case of JP 3333611 B, this invention also falls within the category of the trivalent chromium chemical conversion solution.

JP 2004-3019A proposes a method for forming a chemical conversion film free from hexavalent chromium by treating the metal surface with a solution of at least one trivalent chromium chelate complex, wherein the solution contains trivalent chromium of the chelate complex at a concentration of 5 to 100 g/l, and the trivalent chromium chelate complex has a ligand replacement speed faster than the fluoride replacement speed in the trivalent chromium -fluoro complex. This solution also falls within the category of the trivalent chromium chemical conversion solution.

Similar technology is often used in zinc die cast. JP 3597542B proposes formation of a substantially coherent conversion film containing trivalent chromium but no hexavalent chromium on zinc or a zinc alloy, which presents, even in the absence of further components such as silicate, cerium, aluminum and borate, a corrosion protection of about 100 to 1000 hours in the salt spray test according to DIN 50021 SS or ASTM B 117-73 until first erosion according to DIN 50961 Chapter 10; which is clear, transparent and substantially colorless presenting multi-colored iridescence; which has a layer thickness of about 100 nm to 1000 nm; which is hard and highly adhesive; and which is resistant to wiping. This solution also falls within the category of the trivalent chromium chemical conversion solution.

JP 3784400B by the same inventor as the present invention proposes formation of a chemical conversion film containing 0.02 to 1 mmol/m$^2$ of Cr and 0.02 to 1 mmol/m$^2$ of Ti and/or Zr and having a thickness of 1 to 100 nm, by contacting an aqueous acidic chemical conversion solution adjusted to a pH in the range of 2.3 to 5.0 containing a water-soluble trivalent chromium compound (A), a water-soluble Ti and/or zirconium compound (B), a water-soluble nitric acid compound (C), a water-soluble aluminum compound (D), and a fluorine compound (E) with the surface of a metal material for 1 to 60 seconds; rinsing with water; and drying to thereby form the film. This solution also falls within the category of the trivalent chromium chemical conversion solution.

JP 5-195244A discloses a method for forming a protective film on a metal surface comprising the step of (I) coating the metal surface with a layer of an aqueous acidic liquid composition, and (II) drying the layer of the aqueous acidic liquid composition without intermediate washing. In this method, the aqueous acidic liquid composition contains water; (A) anion components each comprising (i) at least four fluorine atoms and (ii) at least one element selected from the group consisting of titanium, zirconium, hafnium, silicon, and boron, and optionally (iii) anion component containing at least one oxygen atom; (B) cation component selected from the group consisting of cobalt, magnesium, manganese, zinc, nickel, tin, zirconium, iron, aluminum, and copper; (C) a free acid of the amount sufficient for maintaining the pH of the composition to the range of about 0.5 to about 5.0; and optionally, (D) a component which forms an organic thin layer by direct drying; and the number of cations in (B) is at least 1/3 of the number of the anions in (A). This is a dry-in-place type surface treatment method which is a technology different from the chemical conversion method wherein the film is formed by dissolution of the matrix.

JP 2004-238716 A discloses formation of a film having a thickness of 0.01 to 5 $\mu$m on a zinc, zinc alloy, aluminum, or aluminum alloy plated steel plate by a surface treatment comprising the steps of coating and drying a surface treating composition comprising (a) an aqueous epoxy resin dispersion comprising water dispersion of a modified epoxy resin obtained by reacting an epoxy group-containing resin (A), a primary amine compound and/or a secondary amine compound (B), and an active hydrogen-containing compound (C) partly or entirely comprising an active hydrogen-containing hydrazine derivative, (b) a water dispersion of urethane resin, (c) a silane coupling agent, and (d) phosphoric acid and/or hexafluorometallic acid. This method is also a coating surface treatment.

These conventional proposals on the surface treatment may be categorized into (1) use of a zirconium or titanium solution, and their derivative techniques, (2) use of the solution containing vanadium, molybdenum, tungsten, and cobalt, (3) use of an organic solution containing tannic acid or a water-soluble resin, (4) use of an organic/inorganic composite solution containing zirconium in combination with a resin, (5) use of a trivalent chromium solution, and (6) dry-in-place type treatment.

Of these proposals, the use of the trivalent chromium solution (5) will leave trivalent chromium in the resulting film, and when this film is exposed to a high temperature, the trivalent chromium will turn into the hexavalent chromium which is harmful to the human body. Accordingly, this technique is inadequate in environmental point of view. The dry-in-place type treatmentt (6) can be used for a simple structure as in the case of a sheet or coil material. However, this surface treatment (6) is unable to form a consistent film when used for a complicated structure as in the case of an automobile body due to the formation of the liquid pool.

The zirconium solution (1) has sufficient performance for the application such as priming for further coating, cold rolled aluminum material having consistent surface, and other applications without severe requirement for the corrosion resistance, and some are actually used in industrial scale production. For example, the surface treating solution of JP 52-131937A containing phosphoric acid, fluorozirconic acid, and nitric acid for the main components is commercially used in the surface treatment of aluminum D & I cans, and it has been used for more than 25 years. However, in the case of metal structure of transportation vehicle such as automobile, numerous high level requirements are imposed on the chemical conversion process. For example, these metal structures have complicated shape and they comprise plurality of different materials such as cold rolled steel plate and zinc-plated steel plate, and it should also enable the subsequent electrodeposition to be carried out at a high throwing power with reduced amount of the waste from the chemical conversion process. These requirements are not fully overcome.

The solution containing vanadium, molybdenum, tungsten, and cobalt (2) is used in the industry. However, this solution does not dramatically improve the corrosion resistance, and as in the case of other solutions as described above, throwing power during the electrodeposition is not sufficient when used for transportation vehicles such as automobile.

In some cases, corrosion resistance is improved by the use of an organic solution containing tannic acid or a water-soluble resin (3) or by the use of an organic/inorganic composite solution (4) containing zirconium in combination with a resin compared to the use of a zirconium solution (1). However, these solutions are far from perfect in terms of the throwing power during the electrodeposition in the case of the metal structure of transportation vehicles such as automobile.

More recently, JP 2008-8855 1A discloses a metal surface treating method for forming an anti-corrosive film on a metal substrate having a plurality of bent portions at high throwing power. This method uses a metal surface treating composition for pretreatment of the cationic electrodeposition, and this composition contains zirconium ion and/or titanium ion, an agent for improving adhesion, and a stabilizer for suppressing dissolution of the components in the anti-corrosive film during the cationic electrodeposition, and the agent for improving adhesion contains at least one member selected from the group consisting of (A) a silicon-containing compound, (B) a metal ion for improving adhesion, and (C) a resin for improving adhesion. The silicon-containing compound (A) is at least one member selected from the group consisting of silica, silicofluoride, water-soluble silicate compound, silicate ester, alkylsilicate, and silane coupling agent, and the metal ion for improving adhesion (B) is at least one metal ion selected from the group consisting of magnesium, zinc, calcium, aluminum, gallium, indium, copper, iron, manganese, nickel, cobalt, and silver, and the resin for improving adhesion (C) is at least one member selected from polyamine compound, blocked isocyanate compound, and melamine resin. When the film produced by the example of JP 2008-88551A was compared with the conventional phosphate film, the results were not necessarily satisfactory.

JP 2008-88552A discloses a surface treating method for improving throwing power during cationic electrodeposition, comprising the metal surface treating step of contacting a metal substrate with a metal surface treating composition comprising zirconium ion and/or titanium ion and at least one agent for improving adhesion selected from the group consisting of (A) a silicon-containing compound, (B) a metal ion for improving adhesion, and (C) a resin for improving adhesion; and a post treatment step wherein the surface treated metal substrate is subjected to a heat treatment which is at least one treatment selected from the group consisting of (1) the step of drying the metal substrate at a temperature of at least 60°C and up to 190°C at atmospheric or higher pressure for at least 30 seconds, and (2) heating the metal substrate in hot water at a temperature of at least 60°C and up to 120°C at atmospheric or higher pressure for at least 2 seconds and up to600 seconds. This invention, however, includes a step requiring hot air heater or hot water, and when carried out in commercial scale, it leads to an unfavorable increase in the cost and complication. Hence, this method is not practical.

JP 2008-88553A discloses a metal surface treating method for improving throwing power during cationic electrodeposition comprising the step wherein the metal surface is treated for forming an anti-corrosive film by using a metal surface treating composition comprising zirconium ion and/or titanium ion and at least one agent for improving adhesion selected from the group consisting of (A) a silicon-containing compound, (B) a metal ion for improving adhesion, and (C) a resin for improving adhesion; and a post treatment step which is at least one treatment selected from the group consisting of step (a), step (b), step (c), step (d), step (e), step (f), and step (g). The step (a) is a step in which the entire metal substrate which has finished the surface treating step or a part threreof is brought in contact with an alkaline aqueous solution at a pH of 9 or more. The step (b) is a step in which the entire metal substrate which has finished the surface treating step or a part threreof is brought in contact with an aqueous solution of a polyhydric anion. The step (c) is a step in which the entire metal substrate which has finished the surface treating step or a part threreof is brought in contact with an aqueous solution of a polyhydric anion, and then rinsed with water. The step (d) is a step in which the entire metal substrate which has finished the surface treating step or a part threreof is brought in contact with an oxidizing agent. The step (e) is a step in which the entire metal substrate which has finished the surface treating step or a part threreof is brought in contact with an oxidizing agent, and then rinsed with water. The step (f) is a step in which the entire metal substrate which has finished the surface treating step or a part threreof is brought in contact with a fluorine stabilizer. The step (g) is a step in which the entire metal substrate which has finished the surface treating step or a part threreof is brought in contact with a fluorine stabilizer, and then rinsed with water. This invention, however, requires a post treatment after the chemical conversion, and when carried out in commercial scale, it leads to an unfavorable increase in the cost and complication. Hence, this method is not practical.

As described above, the chemical conversion film formed by applying conventional non-chromate type surface treating solution to the transportation vehicle metal structure such as an automobile metal structure had various problems such as the insufficient corrosion resistance and coating adhesion. More specifically, there is no chemical conversion solution or surface treating (surface priming) method which is capable of realizing the throwing power during the electrodeposition at the level required in the case of an automobile metal structure by simple steps at reduced cost, and improvement of the throwing power during the electrodeposition has been a serious agenda that needs improvement.

Patent Document 1: JP 2004-083824 A
Patent Document 2: JP 2004-269942 A
Patent Document 3: JP 52-131937 A
Patent Document 4: JP 57-41376 A
Patent Document 5: JP 56-136978 A
Patent Document 6: JP 2000-199077 A
Patent Document 7: JP 11-36082 A
Patent Document 8: JP 2004-232047 A
Patent Document 9: JP 2001-247977 A
Patent Document 10: WO 03/074761 A1
Patent Document 11: JP 2003-313679 A
Patent Document 12: JP 2003-313681 A
Patent Document 13: JP 2003-171778 A
Patent Document 14: JP 2004-218070 A
Patent Document 15: JP 2004-218073 A
Patent Document 16: JP 2004-218075 A
Patent Document 17: JP 61-91369 A
Patent Document 18: JP 1-172406 A
Patent Document 19: JP 1-177379 A
Patent Document 20: JP 1-177380 A
Patent Document 21: JP 2-608 A
Patent Document 22: JP 2-609 A
Patent Document 23: JP 2771110 B

Patent Document 24: JP 2001-303267 A
Patent Document 25: JP 3333611 B
Patent Document 26: JP 2000-332575 A
Patent Document 27: JP 2004-010937 A
Patent Document 28: JP 2004-3019 A
Patent Document 29: JP 3597542 B
Patent Document 30: JP 3784400 B
Patent Document 31: JP 5-195244 A
Patent Document 32: JP 2004-238716 A
Patent Document 33: JP 52-131937 A
Patent Document 34: JP 2008-88551 A
Patent Document 35: JP 2008-88552 A
Patent Document 36: JP 2008-88553 A

## SUMMARY OF THE INVENTION

The present invention is an attempt to solve the problems of the prior art as described above, and in particular, the present invention provides a chemical conversion solution and the surface treating method for realizing high corrosion resistance and high coating adhesion of the metal surface, as well as high throwing power during electrodeposition. More specifically, the present invention provides a chemical conversion solution and a surface treating method for a metal structure which is capable of realizing high throwing power during the electrodeposition of the level equal to or higher than the case using a phosphate without drying the pretreated metal structure particularly when applied to an automobile body or its part, which provides adequate corrosion resistance and coating adhesion to the metal structure, which is also capable of controlling and reducing the industrial wastes such as sludge in the commercial scale production, and which is economical and inexpensive.

The inventors of the present invention made an extensive investigation on the measures to solve the problems of the prior art as described above, and found that throwing power during the electrodeposition can be greatly improved by depositing a germanium compound, a tin compound and/or a copper compound on the surface of the metal structure, and as a consequence, arrived at a new finding that the throwing power during the electrodeposition can be controlled by means of the underlying film. The inventors of the present invention also found that an even higher corrosion resistance and coating adhesion can be realized when the germanium compound, the tin compound and/or the copper compound is deposited on the metal structure simultaneously with the conventional titanium compound and/or zirconium compound to form a composite film. The present invention has been completed on the bases of such findings.

To achieve the above objectives, the present invention provides; A chemical conversion solution for a metal structure comprising

(A) at least one compound selected from water-soluble germanium compound, water-soluble tin compound, and water-soluble copper compound

(B) at least one compound selected from water-soluble titanium compound and water-soluble zirconium compound,

(C) at least one water-soluble nitrate compound,

(D) at least one compound selected from water-soluble aluminum compound and water-soluble magnesium compound,

(E) at least one water-soluble zinc compound, and

(F) at least one fluorine compound, wherein

content ($C_A$) of at least one member selected from germanium, tin, and copper is 0.05 mmol/L to 10 mmol/L,

content ($C_B$) of titanium and/or zirconium is 0.1 mmol/L to 10 mmol/L,

content ($C_C$) of nitrate radical in the water-soluble nitrate compound (C) is 3 mmol/L to 300 mmol/L,

content ($C_D$) of aluminum and/or magnesium is 1 mmol/L to 200 mmol/L,

content ($C_E$) of zinc is 0.2 mmol/L to 20 mmol/L,

content ($C_F$) of fluorine in the fluorine compound (F) satisfies the following equations:

$$C_F \text{ (minimum value)} = C_A \times 2 + C_B \times 4 + C_D \times 2$$

$$C_F \text{ (maximum value)} = C_A \times 4 + C_B \times 7 + C_D \times 4,$$

and

pH of the chemical conversion solution has been adjusted to the range of 2.5 to 4.4.

More preferably, the present invention provides; The chemical conversion solution for a metal structure wherein the chemical conversion solution further comprises a cationic water-soluble resin (G).

More preferably, the present invention provides; The chemical conversion solution for a metal structure wherein the chemical conversion solution further comprises a coupling agent (H).

More preferably, the present invention provides; The chemical conversion solution for a metal structure wherein the chemical conversion solution further comprises a metal chelating agent (I).

More preferably, the present invention provides; The chemical conversion solution for a metal structure wherein the compound (A) contains at least one member selected from germanium nitrate, germanium sulfate, germanium fluoride, tin nitrate, tin sulfate, tin fluoride, copper nitrate, copper sulfate, and copper fluoride.

More preferably, the present invention provides; The chemical conversion solution for a metal structure wherein the compound (B) contains at least one member selected from titanium sulfate, titanium oxysulfate, titanium ammonium sulfate, titanium nitrate, titanium oxynitrate, titanium ammonium nitrate, fluorotitanic acid, fluorotitanate complex, zirconium sulfate, zirconium oxysulfate, zirconium ammonium sulfate, zirconium nitrate, zirconium oxynitrate, zirconium ammonium nitrate, fluorozirconic acid, and fluorozirconate complex.

More preferably, the present invention provides; The chemical conversion solution for a metal structure wherein the compound (C) contains at least one member selected from germanium nitrate, tin nitrate, copper nitrate, titanium nitrate, zirconium nitrate, magnesium nitrate, calcium nitrate, aluminum nitrate, zinc nitrate, strontium nitrate, and manganese nitrate.

More preferably, the present invention provides; The chemical conversion solution for a metal structurewherein the compound (D) contains at least one member selected from aluminum nitrate, aluminum sulfate, aluminum fluoride, magnesium nitrate, magnesium sulfate, and magnesium fluoride.

More preferably, the present invention provides; The chemical conversion solution for a metal structure wherein the compound (E) contains at least one member selected from zinc nitrate and zinc sulfate

More preferably, the present invention provides; The chemical conversion solution for a metal structure wherein the compound (F) contains at least one member selected from hydrofluoric acid, ammonium fluoride, germanium fluoride, tin fluoride, copper fluoride, fluorotitanic acid, fluorotitanate complex, fuluorozirconic acid, fluorozirconate complex, aluminium fluoride and magnesium fluoride.

More preferably, the present invention provides; The chemical conversion solution for a metal structure wherein the cationic water-soluble resin (G) contains at least one member selected from amino group-containing water-soluble oligomer and water-soluble polymer, and content of the resin (G) is in the range of 0.001 mmol/L to 10 mmol/L.

More preferably, the present invention provides; The chemical conversion solution for a metal structure wherein the coupling agent (H) contains at least one member selected from silicon-containing coupling agent and titanium-containing coupling agent, and content of the coupling agent (H) is 0.001 mmol/L to 10 mmol/L.

More preferably, the present invention provides; The chemical conversion solution for a metal structure wherein the chelating agent (I) contains at least one member selected from oxalic acid, tartaric acid, citric acid, malic acid, organic phosphonic acid, nitrilotriacetic acid (NTA), and ethylenediaminetetraacetic acid (EDTA).

More preferably, the present invention provides; The chemical conversion solution for a metal structure wherein the metal structure is a transportation vehicle or its part constituted from at least one member selected from cold rolled steel plate, aluminum or aluminum alloy plate, zinc or zinc alloy plate, galvanized steel plate, and galvannealed steel plate, and the chemical conversion solution also contains metal ions dissolved from the metal structure.

Moreover, the present invention provides; A method for treating a surface of a metal structure comprising the steps of;-

conducting chemical conversion of the metal structure by using the chemical conversion solution for a metal structure to form a chemical conversion film on the surface of the metal structure to a coating weight in terms of at least one member selected from germanium, tin, and copper of 0.01 mmol/m$^2$ to 1 mmol/m$^2$, and in terms of at least one member selected from titanium and zirconium of 0.02 mmol/m$^2$ to 2 mmol/m$^2$, and 2 to 200 nm in terms of thickness of the film rinsing the metal structure with water, and then, with deionized water, and without drying, subjecting the surface of the metal structure to electrodeposition.

The chemical conversion solution and the surface treating method for a metal structure of the present invention are capable of realizing high corrosion resistance as well as high coating adhesion of the metal surface without using the harmful hexavalent chromium. The chemical conversion solution and the surface treating method for a metal structure of the present invention are also capable of realizing high throwing power during electrodeposition on a complicated structure as in the case of, for example, a transportation vehicle, namely, an automobile. The chemical conversion solution and the surface treatment and the surface treating method of the present invention are also capable of controlling and reducing the industrial wastes such as sludge in the commercial scale production.

DETAILED DESCRIPTION OF THE INVENTION

First, various components constituting the chemical conversion solution of the present invention are described.

[Compounds (A) to (F)]

The at least one compound (A) selected from water-soluble germanium compound, water-soluble tin compound, and water-soluble copper compound is an essential component, and this component greatly contributes for the improvement of throwing power in the electrodeposition. The at least one compound selected from water-soluble germanium compound, water-soluble tin compound, and water-soluble copper compound preferably comprises at least one member selected from germanium nitrate, germanium sulfate, germanium fluoride, tin nitrate, tin sulfate (II), tin (IV) nitrate, tin fluoride, copper nitrate, copper sulfate, and copper fluoride, and more preferably, at least one member selected from germanium fluoride, tin fluoride, tin (II) nitrate, and copper nitrate.
Content ($C_A$) of the compound (A) is preferably in the range of 0.05 mmol/L to 10 mmol/L, and more preferably 0.1 mmol/L to 1 mmol/L in terms of the total metal content of each compound. When the content ($C_A$) is less than 0.05 mmol/L, concentration of the compound (A) in the chemical conversion solution will be insufficient, and coating weight of the compound (A) will be insufficient. When the content ($C_A$) is in excess of 10 mmol/L, concentration in the chemical conversion solution will be high, and the increased cost is economically unfavorable.

The at least one compound (B) selected from water-soluble titanium compound and water-soluble zirconium compound is also an essential component, and this component greatly contributes for the improvement of corrosion resistance. The compound (B) preferably contains at least one compound selected from titanium sulfate, titanium oxysulfate, titanium ammonium sulfate, titanium nitrate, titanium oxynitrate, titanium ammonium nitrate, fluorotitanic acid, fluorotitanate complex, zirconium sulfate, zirconium oxysulfate, zirconium ammonium sulfate, zirconium nitrate, zirconium oxynitrate, zirconium ammonium nitrate, fluorozirconic acid, and fluorozirconate complex, and more preferably, at least one compound selected from fluorotitanic acid, zirconium nitrate, and fluorozirconic acid. Content ($C_B$) of the compound (B) is preferably in the range of 0.1 mmol/L to 10 mmol/L, and more preferably 0.5 mmol/L to 5 mmol/L in terms of the total of the titanium and/or the zirconium. When the content ($C_B$) is less than 0.1 mmol/L, concentration in the chemical conversion solution will be insufficient, and coating weight of the compound (B) will be insufficient. When the content ($C_B$) is in excess of 10 mmol/L, concentration in the chemical conversion solution will be high, and the increased cost is economically unfavorable.

The water-soluble nitrate compound (C) is also an essential component, and this component has influence on the uniformity of the resulting chemical conversion film and greatly contributes for the improvement of final corrosion resistance. Presumably, the compound (C) suppresses excessive etching at the interface between the chemical conversion solution and the metal during the chemical conversion, and this contributes for the improvement in the uniformity of the chemical conversion film. The compound (C) is preferably at least one compound selected from germanium nitrate, tin nitrate, copper nitrate, titanium nitrate, zirconium nitrate, magnesium nitrate, calcium nitrate, aluminum nitrate, zinc nitrate, strontium nitrate, and manganese nitrate, and more preferably at least one compound selected from tin nitrate, zirconium nitrate, magnesium nitrate, aluminum nitrate, and zinc nitrate. Content ($C_C$) of the nitrate compound (C) is preferably in the range of 3 mmol/L to 300 mmol/L, and more preferably 20 mmol/L to 200 mmol/L in terms of the nitrate radical from the nitrate salt. When the content (Cc) is less than 3 mmol/L, uniformity of the chemical conversion film will be insufficient, and the final corrosion resistance will be insufficient. Content ($C_C$) in excess of 300 mmol/L does not adversely affect the improvement in the corrosion resistance. However, such high content inevitably results in the high nitrate radical concentration in the water used in the rinsing, and hence, in the increased nitrogen content of the final waste water treatment, which may invite eutrophication.

The compound (D) selected from water-soluble aluminum compound and water-soluble magnesium compound is also an essential component, and by suppressing excessive etching, this component has the effect of facilitating efficient and uniform deposition of the chemical conversion film. The compound (D) is preferably at least one compound selected from aluminum nitrate, aluminum sulfate, aluminum fluoride, magnesium nitrate, magnesium sulfate, and magnesium fluoride, and more preferably, at least one compound selected from aluminum nitrate, aluminum sulfate, aluminum fluoride, magnesium nitrate, and magnesium sulfate. Content ($C_D$) of the compound (D) is preferably in the range of 1 mmol/L to 200 mmol/L, and more preferably 5 mmol/L to 50 mmol/L in terms of the total of the aluminum and/or the magnesium. When the content ($C_D$) is less than 1 mmol/L, efficient and uniform formation of the chemical conversion film is not realized, and this also results in the increase of the time required for the film formation. Content ($C_D$) in excess of 200 mmol/L does not adversely affect on the improvement in the corrosion resistance. However, the high concentration in the chemical conversion solution will invite increase in the cost which is economically unfavorable.

The water-soluble zinc compound (E) is also an essential component, and this component has the effect of improving the uniformity of the chemical conversion film formed. The compound (E) preferably contains zinc nitrate or zinc sulfate. Content ($C_E$) of the compound (E) is preferably in the range of 0.2 mmol/L to 20 mmol/L, and more preferably 1 mmol/L to 5 mmol/L in terms of the zinc. When the content ($C_E$) is less than 0.2 mmol/L, uniformity of the resulting chemical conversion film will not be sufficient, and as a consequence, the corrosion resistance will be insufficient. The content ($C_E$) in excess of 20 mmol/L is not preferable since formation of the chemical conversion film is likely to be prevented at such content.

The fluorine compound (F) is also an essential component, and is very important. The fluorine compound (F) is a compound which has influence on the etching of the metal, and in the case of the chemical conversion solution of the present invention, the fluorine compound (F) has been found to also have a great effect on the corrosion resistance. It has also been found that generation of sludge in continuous operation of the chemical conversion can be suppressed by controlling the content of the fluorine compound (F) to specified range. In the prior art, stress has been laid on the influence of the fluorine compound on the metal etching, and only very few documents have referred to the improvement of the corrosion resistance or stability of the chemical conversion solution. The fluorine compound (F) preferably contains at least one compound selected from hydrofluoric acid, ammonium fluoride, germanium fluoride, tin fluoride, copper fluoride, fluorotitanic acid, fluorotitanate complex, fluorozirconic acid, fluorozirconate complex, aluminum fluoride, and magnesium fluoride.

Content of the fluorine compound (F) is closely related with the content of the at least one compound (A) selected from water-soluble germanium compound, water-soluble tin compound, and water-soluble copper compound, the at least one compound (B) selected from water-soluble titanium compound and water-soluble zirconium compound, and the at least one compound (D) selected from water-soluble aluminum and water-soluble magnesium compound. Based on the experimental findings, the content of the fluorine compound (F) is preferably in the range defined by the following equations, namely, in the range determined by the contents of the compounds (A), (B), and (D).

Stable fluoride is formed when the compound (A) is divalent to tetravalent, the compound (B) is hexavalent, and the compound (D) is trivalent when it is an aluminum compound and divalent when it is a magnesium compound. When the fluorine compound (F) is excessive, the compound is believed to be in the form of HF. While stability of the chemical conversion solution is improved in the excess of the fluorine compound (F), the chemical conversion film is not formed at excessively high concentration of the fluorine compound (F). In the meanwhile, excessively low concentration of the fluorine compound (F), the compound will result in the insufficient etching ability, and will result in the partial surface etching (presumably due to the selective etching of the relatively active surface part). This results in the poor uniformity of the chemical conversion film, and hence, in the poor corrosion resistance. Stability of the chemical conversion solution will also be insufficient, and this will result in the generation of the sludge. The following equations were determined by taking all of these findings in consideration.

$$C_F \text{ (minimum value)} = C_A \times 2 + C_B \times 4 + C_D \times 2$$

$$C_F \text{ (maximum value)} = C_A \times 4 + C_B \times 7 + C_D \times 4$$

When the $C_F$ is less than the $C_F$ (minimum value) defined by the equation, etching ability of the chemical conversion solution will be insufficient, and this will result in the partial surface etching (presumably due to the selective etching of the relatively active surface part). This results in the formation of the chemical conversion film with poor uniformity, and hence, in the poor corrosion resistance. Stability of the chemical conversion solution will also be insufficient, and this will result in the increased sludge generation. On the other hand, the $C_F$ in excess of the $C_F$ (maximum value) is not preferable since excessively strong etching ability will result in the reduced efficiency of the chemical conversion film deposition. The more preferable ranges of the $C_F$ (optimal minimum value) and $C_F$ (optimal maximum value) are as defined by the following equations.

$$C_F \text{ (optimal minimum value)} = C_A \times 2 + C_B \times 6 + C_D \times 2$$

$$C_F \text{ (optimal maximum value)} = C_A \times 3 + C_B \times 6 + C_D \times 4$$

[pH of the chemical conversion solution]

In the chemical conversion solution of the present invention, pH is very important, and the pH should be controlled to the range of 2.5 to 4.4. More specifically, intended merits of the chemical conversion solution of the present invention are sufficiently realized only after controlling the pH of the chemical conversion solution to the range of 2.5 to 4.4 not only before its use in the chemical conversion but also during the continuous operation of the chemical conversion. Accordingly, in the present invention, pH range has been limited to such range by also considering the pH during the chemical conversion. When the pH is less than 2.5, the solution will have excessive etching ability, and the chemical conversion film will be deposited at an insufficient efficiency. On the other hand, the pH in excess of 4.4 will result in the excessive sludge generation during the continuous chemical conversion operation. More preferably, the pH is in the range of 3.0 to 4.0. More specifically, the pH is preferably in somewhat lower range of 3.0 to 3.6 when the compound (B) is a water-soluble titanium compound, and in somewhat high range of 3.4 to 4.0 when the compound (B) is a water-soluble zirconium compound. The method used for controlling the pH is not particularly limited, and the pH may be controlled by adding an inorganic acid such as nitric acid (which corresponds to the compound (C)) or hydrofluoric acid (which corresponds to the compound (F)), or by adding an organic acid such as oxalic acid, or alternatively, by adding a base such as ammonium hydrogen carbonate or ammonia solution.

[Components (G) to (I)]

Preferably, the chemical conversion solution for a metal structure of the present invention further comprises a cationic water-soluble resin (G). The water-soluble resin (G) has the merit that it improves the coating adhesion by depositing simultaneously with other essential components to form the chemical conversion film. Incorporation of the cationic water-soluble resin (G) is particularly effective, for example, when the paint for electrodepositon coated over the chemical conversion film has poor adhesion. The water-soluble resin (G) preferably contains at least one member selected from amino group-containing water-soluble oligomer and water-soluble polymer. More specifically, the cationic water-soluble resin (G) is preferably an amino group-containing oligomer with the molecular weight of 2000 to 10000 or an amino group-containing polymer with the molecular weight of 10000 to 30000 such as polyvinyl, polyvinyl phenol, or phenol formalin condensate oligomer or polymer. In view of preventing the inhibition of the chemical conversion, the cationic water-soluble resin (G) is preferably an oligomer with lower molecular weight. Content of the water-soluble resin (G) is in the range of 0.001 mmol/L to 10 mmol/L. This range may differ by the molecular weight of the cationic water-soluble resin (G) and when defined in terms of ppm by weight, the content is preferably in the range of 2 ppm to 100,000 ppm, and more preferably 10 ppm to 400 ppm. Use of the cationic water-soluble resin (G) at an excessively low content is meaningless since improvement in the coating adhesion is not realized at such content. Excessively high content is also unpreferable in view of economy, and also in view of the risk of inhibiting the chemical conversion reaction.

Preferably, the chemical conversion solution for a metal structure of the present invention further comprises a coupling agent (H). The coupling agent (H) has the merit that it improves the coating adhesion through deposition simultaneously with other essential components to form the chemical conversion film. Incorporation of the coupling agent (H) is particularly effective, for example, when the paint for electrodeposition coated over the chemical conversion film has poor adhesion. The coupling agent (H) preferably contains at least one member selected from silane coupling agent and titanium coupling agent. More specifically, the coupling agent (H) is preferably an amino group-containing aminosilane coupling agent or an epoxy group-containing epoxy silane coupling agent. Content of the coupling agent (H) is preferably in the range of 0.001 mmol/L to 10 mmol/L, and more preferably 0.1 mmol/L to 0.6 mmol/L. Use of the coupling agent (H) at an excessively low content is meaningless since improvement in the coating adhesion is not realized at such content. Excessively high content is also unpreferable in view of economy, and also in view of the risk of inhibiting the chemical conversion reaction.

Preferably, the chemical conversion solution for a metal structure of the present invention further comprises a metal chelating agent (I). The metal chelating agent (I) has the merit that it improves the stability of the chemical conversion solution without forming the chemical conversion film by depositing simultaneously with other essential components to form the chemical conversion film. When a large amount of solution is carried from the previous step (degreasing) and the like to the step of the chemical conversion (for example, as in the case when the rinsing with water or the amount of water used in such rinsing is insufficient), the pH often increases and this increase in the pH often has the adverse effects on the stability of the chemical conversion solution, and in such as case, incorporation of the metal chelating agent (I) has the merit of improving the stability of the chemical conversion solution. The metal chelating agent (I) preferably contains at least one member selected from oxalic acid, tartaric acid, citric acid, malic acid, organic phosphonic acid, NTA, and EDTA. Content of the metal chelating agent (I) is preferably in the range of 0.001 mmol/L to 10 mmol/L, and more preferably 0.1 mmol/L to 0.6 mmol/L. Use of the metal chelating agent (I) at an excessively low content is meaningless since improvement in the stability of the chemical conversion solution is not realized at such content. Excessively high content is also unpreferable in view of economy, and also in view of the risk of inhibiting the chemical conversion reaction.

[Preparation of the chemical conversion solution]

The chemical conversion solution for a metal structure of the present invention is prepared by adding various component compounds in the solvent water in arbitrary order, and stirring the mixture.

[Metal structure]

The metal structure to be contacted with the chemical conversion solution of the present invention for its surface treatment is not particularly limited. The metal structure, however, is preferably a transportation vehicle or its part constituted from at least one metal material selected from cold rolled steel plate, aluminum or aluminum alloy plate, zinc or zinc alloy plate, zinc-plated steel plate, and galvannealed steel plate, which are used in the art.

[Surface treating method]

The surface treatment of the metal structure according to the present invention is conducted by bringing the metal structure in contact with the chemical conversion solution for a metal structure as described above. In this surface treatment, the surface of the metal structure which is contacted with the chemical conversion solution should be clean, and oil, dirt, and metal powder (caused by abrasion, molding, and the like) should be removed beforehand. The method used for the cleaning is not particularly limited, and a typical method used for commercial cleaning is the cleaning with an alkaline. After cleaning the metal structure with water and removing the alkali components and the like used for the cleaning, the surface of the metal structure is brought in contact with the chemical conversion solution of the present invention. The chemical conversion is preferably conducted at a temperature of 25°C to 60°C for a reaction time of typically 2 seconds to 600 seconds although the reaction time may vary by the material constituting the metal structure, concentration of the chemical conversion solution, and temperature of the chemical conversion. When the metal structure has a complicated shape as in the case of the automobile body, the structure is immersed in the solution for contact with the solution typically for 30 seconds to 120 seconds since replacement of the solution in the interior of the pocket structure is needed. Spraying and other surface treating method may also be used as long as the solution replacement is possible.

There is no problem if the chemical conversion solution of the present invention contains the metal ion dissolved from the metal structure during the continuous surface treating operation. For example, in the surface treatment of a metal structure comprising a cold rolled steel plate, iron ion gradually increases in the chemical conversion solution. However, problems such as sludge generation will not occur as long as content of the compound constituting the solution is controlled to the range as described above. In the case of normal automobile body, the chemical conversion solution is naturally carried away with the transfer of the automobile body, and the metal ion dissolved from the automobile body reaches constant value at a relatively low concentration of less than 100 ppm by weight. Preferably, the dissolved metal ion is actively removed from the system, for example, by centrifugation or filtration using various membranes. In the case of the surface treatment of a metal structure comprising a zinc-plated steel plate or aluminum, the dissolved metal ion may constitute the essential components of the present invention, and the chemical conversion solution of the present invention can be used more efficiently. The surface treated metal structure is rinsed with water, and then, with deionized water, and without drying, the metal structure is subjected to coating by electrodeposition.

[Chemical conversion film]

By the surface treating method of the present invention, a film is formed so that coating weight of the chemical conversion film on the surface of the metal structure is $0.01\ mmol/m^2$ to $1\ mmol/m^2$ in terms of germanium, tin, copper, or their total weight, and $0.02\ mmol/m^2$ to $2\ mmol/m^2$ in terms of titanium, zirconium, or their total weight, or 2 nm to 200 nm in thickness. When the coating weight in terms of germanium, tin, copper, or their total weight is less than $0.01\ mmol/m^2$, throwing power in the coating by electrodeposition is not sufficiently improved. On the other hand, the coating weight in excess of $1\ mmol/m^2$ has no particular problem while excessive use of such expensive material is economically unfavorable. More preferably, the coating weight is in the range of $0.1\ mmol/m^2$ to $0.5\ mmol/m^2$. The preferable range, however, may vary by the material constituting the metal structure, and a relatively high coating weight is required in the case of the cold rolled steel plate. In the case of galvannealed steel plate a sufficient throwing power is realized at a lower coating weight, and in the case of aluminum material, sufficient throwing power is realized at even lower coating weight. It is to be considered that the germanium and/or tin and/or copper is basically present in the form of oxide, hydroxide, or fluoride. Although the nature of the germanium, tin, and copper may be somewhat different by the type of the metal structure, they are basically present as a conductor or semiconductor on the surface of the metal structure, and they adequately control the hydrogen gas generation during the electrodeposition. They also improve adhesion between the film and the deposited coating, and as a consequence, they improve resistance of the electrodeposited components, and hence, throwing power during the electrodeposition. Accordingly, germanium, tin, or copper is preferably present at the outermost surface of the film.

When the titanium, zirconium or their total weight is less than 0.02 mmol/m$^2$, the coating weight is insufficient, and hence, the corrosion resistance is insufficient. On the other hand, a sufficient corrosion resistance is realized at a coating weight in excess of 2 mmol/m$^2$, while such excessive coating weight is economically unfavorable due to the increased surface treatment cost. More preferably, the coating weight is in the range of 0.1 mmol/m$^2$ to 1 mmol/m$^2$, and this corresponds to the thickness of 2 nm to 200 nm, and more preferably, 20 nm to 100 nm. It is to be noted that the titanium and/or zirconium is also postulated to be basically present in the form of oxide or hydroxide. In principle, titanium and/or zirconium has high barrier properties with high acid and alkaline resistance, and this contributes for the high corrosion resistance. The film in terms of the thickness is in the range of 2 to 200 nm, and a more preferable film has a thickness of 20 to 100 nm. It is to be considered that this substance is also present in the form of oxide or hydroxide, and in principle, it has high barrier properties with high acid and alkaline resistance, and this contributes for the high corrosion resistance.

Examples

Next, novelty, inventive step, and utility of the chemical conversion solution and the surface treating method for a metal structure of the present invention are described in detail by referring to Examples and Comparative Examples. First, the metal plates, the surface treating method, the pretreatment (cleaning), and the electrodeposition of the metal plates are described. Composition of the chemical conversion solution and the test method (evaluation method) of the metal plates are then described. The results of the tests (evaluations) are summarized in Tables 1 to 3.

[Metal plate]

Three metal plates, namely, a cold rolled steel plate [70 x 150 x 0.8 mm; SPCC (JIS 3141) manufactured by PALTEC], galvannealed steel plate [70 x 150 x 0.8 mm; SGCC F06 MO (JIS G3302) manufactured by PALTEC], and aluminum alloy plate [70 x 150 x 1.0 mm; A5052P (JIS 4000) manufactured by PALTEC] were used. In the following description, the cold rolled steel plate is abbreviated as SPC, the galvannealed steel plate is abbreviated as GA, and the aluminum alloy plate is abbreviated as AL.

[Cleaning method]

The surface of each metal plate was degreased by using a degreaser [Fine Cleaner E2001 (component A, 13 g/I; component B, 7 g/I) manufactured by Nihon Parkerizing Co.,Ltd.]. More specifically, the degreaser was used by heating the metal plate to 40°C and spraying the degreaser for 120 seconds. The metal plate was then rinsed by spraying water for 30 seconds, and the surface of the metal plate was treated by using the chemical conversion solution to thereby form the chemical conversion film. The box as described below was treated by using the same degreaser. However, the degreasing was conducted by dipping for 180 seconds. The rinsing with water was also conducted by dipping for 60 seconds with thorough shaking.

[Surface treating method]

The chemical conversion solution having the composition as will be described later was prepared. The chemical conversion solution was stirred at the predetermined temperature for 1 hour, and then allowed to stand to examine the stability of the pH and the like as well as the generation of precipitate (sludge generation). Then appearance of the chemical conversion solution was observed, and this appearance is referred to as the initial appearance. The metal plate was then surface treated by one of the following surface treating methods (1) to (3). After the surface treatment, the metal plate was rinsed under running tap water (at room temperature for 30 seconds), and then, with deionized water (at room temperature for 30 seconds).

Surface treating method (1)

Surface treating temperature: 45°C
Surface treating time: 90 seconds
Contact method: dipping

Surface treating method (2)

Surface treating temperature: 35°C
Surface treating time: 120 seconds
Contact method: dipping

Surface treating method (3)

Surface treating temperature: 50°C
Surface treating time: 45 seconds
Contact method: dipping

[Electrodeposition method]

The metal plate which had been formed with the chemical conversion film and which had been rinsed with water and deionized water without drying was subjected to electrodeposition by using an electrodeposition paint [GT-10HT manufactured by Kansai Paint Co., Ltd.]. The cathodic electrolysis was conducted at a constant voltage for 180 seconds to deposit the coating, and after rinsing with water, the coating was baked at 170°C for 20 minutes to thereby complete the coating by electrodeposition. The coating thickness was adjusted to 20 $\mu$m by controlling the voltage.

[Example 1]

Chemical conversion solution 1 having the following composition was prepared, and surface treatment of the three types of the metal plate and the box as described below was conducted by the surface treating method (1) to form a chemical conversion film. The chemical conversion solution 1 was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 1

(A): tin fluoride, 0.2 mmol/L
(B): fluorotitanic acid, 3 mmol/L
(C): nitrate radical from (D) and (E), 10 mmol/L
(D): aluminum nitrate, 2 mmol/L
(E): zinc nitrate, 2 mmol/L
(F): total fluorine in hydrofluoric acid, (A), and (B), 23 mmol/L
pH adjusted to 3.2 with ammonia solution
$C_F$ (minimum value) was calculated to be 16.4 mmol/L, and $C_F$ (maximum value) was calculated to be 29.8 mmol/L.

[Coating weight of the chemical conversion solution]

Coating weight of the chemical conversion solution on the surface treated metal plate was measured by using X-ray fluorescence analyzer (System 3270E manufactured by Rigaku Corporation). For the measurement of the coating weight, the surface treated metal plate was used after rinsing with water, and then with deionized water, and drying with cold air.

[Thickness of the chemical conversion film]

Thickness of the chemical conversion film of the surface treated metal plate was measured by surface analyzer (ESCA-850M manufactured by Shimadzu Corporation; used at a sputtering speed of 80 nm/minute). More specifically, the chemical conversion film was sputtered with argon, and the time required until the percentage of the matrix metal reached 70% by atom was measured, and the film thickness was calculated from this sputtering time. The metal plate used for the measurement was the one used for the measurement of the coating weight.

[Coating adhesion]

Cross cuts were made on the metal plate having the electrodeposited coating, and after immersing the metal plate in boiling water for 1 hour, water was wiped off the metal plate. An adhesive tape was attached and peeled to observe the state of the metal plate with the cross cuts. Of the 100 squares formed by the cross cuts, the squares remaining on the metal plate without being peeled off the plate was counted. Accordingly, 100 is the best and 0 is the worst.

[Thickness of the electrodeposited coating]

Coating thickness of the metal plate after the coating by the electrodeposition was measured by using a commercially available electromagnetic coating thickness tester (LZ-200 manufactured by Kett Electric Laboratory).

[Corrosion resistance]

Salt spray test (JIS-Z2371) was conducted after forming cross cuts on the electrodeposited metal plate, and single side bulging width was evaluated after 1000 hours. In general, in the case of a cold rolled steel plate, the corrosion resistance is evaluated "good" when the single side blister width is up to 3 mm and "excellent" when the single side blister width is up to 2 mm. In the case of a galvannealed steel plate, the corrosion resistance is evaluated "good" when the single side blister width is up to 1.2 mm, and up to 0.5 mm in the case of an aluminum alloy plate.

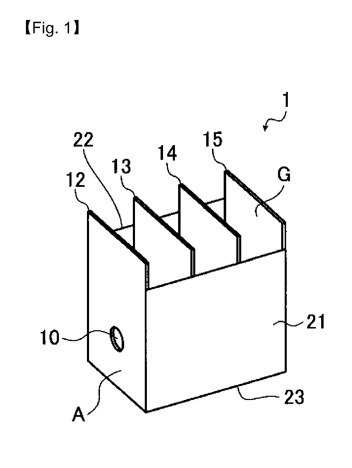

[Test method for evaluating throwing power in the coating by electrodeposition] 4 metal plates 12, 13, 14, and 15 of the same type were prepared, and a hole 10 having a diameter of 8 mm was formed in 3 (12, 13, and 14) of the 4 plates at a position 50 mm from the bottom and at the same distance from both sides. The 4 metal plates 12 to 15 were assembled as shown in FIG. 1 with the metal plates arranged at an interval of 20 mm. Vinyl chloride plates 21, 22, and 23 were attached to both sides and bottom of the metal plates 12 to 15, and the vinyl chloride plates 21 to 23 and the metal plate 12 to 15 were fixedly secured by using an adhesive tape to thereby complete the assembly of four-plate box 1. The thus assembled box was subjected to surface treatment, and without drying, this surface treated box was coated by electrodeposition. A stainless steel (SUS304) plate having a size of 70 mm x 150 mm x 0.55 mm having one surface insulated with an insulator tape was used for the counter electrode. The coating composition for the electrodeposition was filled until the metal plates 12 to 15 and the counter electrode were immersed to a depth of 90 mm. The coating composition for the electrodeposition was maintained at a temperature of 28°C, and the electrodeposition was conducted while stirring the composition with a stirrer. Wiring was conducted to short-circuit all of the 4 metal plates 12 to 15, and a coating was deposited by cathodic electrolysis using the counter electrode for the anode by using a rectifier. More specifically, the electrolysis was conducted by linearly increasing the voltage to the anode from 0 V to 230 V in 30 seconds, and maintaining the voltage at 230 V for 150 seconds. After the electrolysis, the metal plates 12 to 15 were rinsed with water, and baked at 170°C for 20 minutes to form the coating. The surface on the side of the counter electrode of the metal plate 12 nearest to the counter electrode was designated "surface A", and the surface on the side of the counter electrode of the metal plate 15 which is the plate most remote from the counter electrode was designated "surface G". Coating thickness of the surface A and the surface G was measured, and the A/G ratio was used as an index of the throwing power in the coating by electrodeposition. In general, the ratio of up to 2.5 is the acceptable level, and the ratio of up to 2.0 is the excellent level.

[Sludge generation test]

Sludge generation test was conducted in order to evaluate feasibility for commercial scale production of the surface treatment. First, initial appearance of the chemical conversion solution was checked. Next, the metal plates as described above were continuously surface treated by using 1 L of the chemical conversion solution for 10 minutes. Loss of the solution in the surface treatment caused by the formation of the chemical conversion film and carrying over to the subsequent step was adequately replenished to keep the initial level. The chemical conversion solution after the surface treatment was allowed to stand at 40°C for 48 hours, and the chemical conversion solution was visually evaluated for its state (such as turbidity) and generation of the precipitate (the sludge generation). The solution with no sludge generation is favorable.

[Example 2]

Chemical conversion solution 2 having the following composition was prepared, and surface treatment of the three types of the metal plate and the box was conducted by the surface treating method (3). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and wituout drying, the metal plate was subjected to the electrodeposition by using the procedure and conditions as described above to thereby form the coating.

Chemical conversion solution 2

(A): tin fluoride, 1 mmol/L
(B): fluorotitanic acid, 5 mmol/L
(C): nitrate radical from (D) and (E), 40 mmol/L
(D): aluminum nitrate, 10 mmol/L
(E): zinc nitrate, 5 mmol/L
(F): total fluorine in hydrofluoric acid, (A), and (B), 47 mmol/L
pH adjusted to 3.6 with ammonia solution
$C_F$ (minimum value) was calculated to be 42 mmol/L, and $C_F$ (maximum value) was calculated to be 79 mmol/L.

[Example 3]

Chemical conversion solution 3 having the following composition was prepared, and surface treatment of the three types of the metal plate and the box was conducted by the surface treating method (2). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 3

(A): germanium fluoride, 0.5 mmol/L
(B): fluorotitanic acid, 0.1 mmol/L; fluorozirconic acid, 0.5 mmol/L
(C): nitrate radical from (D) and (E), 8 mmol/L
(D): aluminum nitrate, 2 mmol/L
(E): zinc nitrate, 1 mmol/L
(F): total fluorine in hydrofluoric acid and (B), 10 mmol/L
pH adjusted to 3.7 with ammonia solution
$C_F$ (minimum value) was calculated to be 7.4 mmol/L, and $C_F$ (maximum value) was calculated to be 14.2 mmol/L.

[Example 4]

Chemical conversion solution 4 having the following composition was prepared, and surface treatment of the three types of the metal plate and the box was conducted by the surface treating method (1). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 4

(A): tin (II) nitrate, 1 mmol/L
(B): fluorozirconic acid, 4 mmol/L
(C): nitrate radical from (A) and (E): 4 mmol/L
(D): magnesium sulfate, 10 mmol/L

(E): zinc nitrate, 1 mmol/L
(F): total fluorine in ammonium fluoride and (B), 47 mmol/L
pH adjusted to 4.4 with ammonia solution
$C_F$ (minimum value) was calculated to be 38 mmol/L, and $C_F$ (maximum value) was calculated to be 72 mmol/L.

[Example 5]

Chemical conversion solution 5 having the following composition was prepared, and surface treatment of the three types of the metal plate and the box was conducted by the surface treating method (2). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 5

(A): tin fluoride, 0.2 mmol/L; germanium fluoride, 0.2 mmol/L
(B): zirconium nitrate, 4 mmol/L
(C): nitrate radical from (B), (D), and (E): 31 mmol/L
(D): aluminum nitrate, 5 mmol/L
(E): zinc nitrate, 4 mmol/L
(F): total fluorine in hydrofluoric acid and (A), 40 mmol/L
pH adjusted to 4.2 with ammonia solution
$C_F$ (minimum value) was calculated to be 26.8 mmol/L, and $C_F$ (maximum value) was calculated to be 49.6 mmol/L.

[Example 6]

Chemical conversion solution 6 having the following composition was prepared, and surface treatment of the three types of the metal plate and the box was conducted by the surface treating method (1). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 6

(A): tin (II) nitrate, 0.5 mmol/L; germanium nitrate, 1 mmol/L
(B): fluorozirconic acid, 5 mmol/L
(C): nitrate radical from (A), (D), and (E), 34 mmol/L
(D): aluminum nitrate, 10 mmol/L
(E): zinc nitrate, 0.5 mmol/L
(F): total fluorine in hydrofluoric acid and (B), 60 mmol/L
pH adjusted to 3.8 with ammonia solution
$C_F$ (minimum value) was calculated to be 43 mmol/L, and $C_F$ (maximum value) was calculated to be 81 mmol/L.

[Example 7]

Chemical conversion solution 7 having the following composition was prepared, and surface treatment of the three types of the metal plate and the box was conducted by the surface treating method (2). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 7

(A): tin fluoride, 1 mmol/L; germanium fluoride, 0.1 mmol/L
(B): fluorozirconic acid, 2 mmol/L
(C): nitrate radical from (E), 1 mmol/L
(D): magnesium fluoride, 0.6 mmol/L
(E): zinc nitrate, 0.5 mmol/L
(F): total fluorine in hydrofluoric acid, (A), (B), and (D), 17 mmol/L
pH adjusted to 4.0 with ammonia solution
$C_F$ (minimum value) was calculated to be 11.4 mmol/L, and $C_F$ (maximum value) was calculated to be 20.8 mmol/L.

[Example 8]

Chemical conversion solution 8 having the following composition was prepared, and surface treatment of the three types of the metal plate and the box was conducted by the surface treating method (1). The chemical conversion solution was prepared by adding the following components (A) to (G) to 80% of the total content of water in the order of (F), (A), (B), (D), (E) and (G), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 8

(A): tin fluoride, 1 mmol/L; germanium fluoride, 0.1 mmol/L
(B): fluorozirconic acid, 2 mmol/L
(C): nitrate radical from (D) and (E): 11 mmol/L
(D): magnesium nitrate, 5 mmol/L
(E): zinc nitrate, 0.5 mmol/L
(F): total fluorine in hydrofluoric acid, (A), and (B), 22 mmol/L
(G): aminated polyvinyl phenol (average molecular weight, 10000), 0.004 mmol/L
pH adjusted to 3.3 with ammonia solution
$C_F$ (minimum value) was calculated to be 20.2 mmol/L, and $C_F$ (maximum value) was calculated to be 38.8 mmol/L.

[Example 9]

Chemical conversion solution 9 having the following composition was prepared, and surface treatment of the three types of the metal plate and the box was conducted by the surface treating method (3). The chemical conversion solution was prepared by adding the following components (A) to (G) to 80% of the total content of water in the order of (F), (A), (B), (D), (E) and (G), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 9

(A): tin fluoride, 0.2 mmol/L; germanium fluoride, 0.2 mmol/L
(B): zirconium nitrate, 4 mmol/L
(C): nitrate radical from (B) and (E): 16 mmol/L
(D): aluminum sulfate, 2 mmol/L; magnesium sulfate, 3 mmol/L

(E): zinc nitrate, 4 mmol/L
(F): total fluorine in hydrofluoric acid and (A), 40 mmol/L
(G): condensation product of aminated phenol formalin (average molecular weight, 2000), 0.1 mmol/L
pH adjusted to 3.6 with ammonia solution
$C_F$ (minimum value) was calculated to be 26.8 mmol/L, and $C_F$ (maximum value) was calculated to be 49.6 mmol/L.

[Example 10]

Chemical conversion solution 10 having the following composition was prepared, and surface treatment of the three types of the metal plate and the box was conducted by the surface treating method (1). The chemical conversion solution was prepared by adding the following components (A) to (F) to 80% of the total content of water in the order of (F), (A), (B), nitric acid, (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 10

(A): tin (IV) nitrate, 0.2 mmol/L
(B): fluorozirconic acid, 2 mmol/L
(C): nitrate radical from nitric acid, (A), (D), and (E), 40 mmol/L
(D): magnesium nitrate, 5 mmol/L
(E): zinc nitrate, 5 mmol/L
(F): total fluorine in ammonium fluoride and (B), 30 mmol/L
pH adjusted to 3.8 with ammonia solution
$C_F$ (minimum value) was calculated to be 18.4 mmol/L, and $C_F$ (maximum value) was calculated to be 34.8 mmol/L.

[Example 11]

Chemical conversion solution 11 having the following composition was prepared, and surface treatment of the three types of the metal plate and the box was conducted by the surface treating method (1). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 11

(A): tin fluoride, 0.1 mmol/L
(B): fluorozirconic acid, 5 mmol/L
(C): nitrate radical from (D), 1.5 mmol/L
(D): aluminum nitrate, 0.5 mmol/L
(E): zinc sulfate, 0.4 mmol/L
(F): total fluorine in hydrofluoric acid, (A), and (B), 32 mmol/L
pH adjusted to 3.8 with ammonia solution
$C_F$ (minimum value) was calculated to be 21.2 mmol/L, and $C_F$ (maximum value) was calculated to be 37.4 mmol/L.

[Example 12]

Chemical conversion solution 12 having the following composition was prepared, and surface treatment of the three types of the metal plate and the box was conducted by the surface treating method (3). The chemical conversion solution was prepared by adding the following components (A) to (I) to 80% of the total content of water in the order of (F), (A), (B), (D), (E), (H), and (I), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 12

(A): tin (II) nitrate, 0.5 mmol/L; germanium nitrate, 1 mmol/L
(B): fluorozirconic acid, 4 mmol/L; fluorotitanic acid, 1 mmol/L
(C): nitrate radical from (A), (D), and (E), 34 mmol/L
(D): aluminum nitrate, 10 mmol/L
(E): zinc nitrate, 0.5 mmol/L
(F): total fluorine in hydrofluoric acid and (B), 60 mmol/L
(H): epoxy silane coupling agent (G0261 manufactured by Tokyo Chemical Industry Co., Ltd.), 0.1 mmol/L
(I): ethylenediaminetetraacetic acid, 0.01 mmol/L
pH adjusted to 3.6 with ammonia solution
$C_F$ (minimum value) was calculated to be 43 mmol/L, and $C_F$ (maximum value) was calculated to be 81 mmol/L.

[Example 13]

Chemical conversion solution 13 having the following composition was prepared, and surface treatment of the three types of the metal plate and the box was conducted by the surface treating method (1). The chemical conversion solution was prepared by adding the following components (A) to (I) to 80% of the total content of water in the order of (F), (A), (B), nitric acid, (D), (E), (H), and (I), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 13

(A): tin (II) nitrate, 0.5 mmol/L, germanium nitrate, 1 mmol/L
(B): fluorozirconic acid, 4 mmol/L, fluorotitanic acid, 1 mmol/L
(C): nitrate radical from nitric acid, (A), (D), and (E): 20 mmol/L
(D): aluminum nitrate, 2 mmol/L
(E): zinc nitrate, 0.5 mmol/L
(F): total fluorine in hydrofluoric acid and (B), 40 mmol/L
(H): aminosilane coupling agent (A0876 manufactured by Tokyo Chemical Industry Co., Ltd.), 0.1 mmol/L
(I): nitrilotriacetic acid, 0.1 mmol/L
pH adjusted to 4.0 with ammonia solution
$C_F$ (minimum value) was calculated to be 27 mmol/L, and $C_F$ (maximum value) was calculated to be 49 mmol/L.

[Example 14]

Chemical conversion solution 14 having the following composition was prepared, and surface treatment of the three types of the metal plate and the box was conducted by the surface treating method (2). The chemical conversion solution was prepared by adding the following components (A) to (F) to 80% of the total content of water in the order of (F), (A), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 14

(A): copper nitrate, 1 mmol/L
(B): fluorozirconic acid, 4 mmol/L
(C): nitrate radical from (A) and (E), 4 mmol/L
(D): magnesium sulfate, 10 mmol/L
(E): zinc nitrate, 1 mmol/L
(F): total fluorine in ammonium fluoride and (B), 47 mmol/L
pH adjusted to 4.4 with ammonia solution
$C_F$ (minimum value) was calculated to be 38 mmol/L, and $C_F$ (maximum value) was calculated to be 72 mmol/L.

[Example 15]

Chemical conversion solution 15 having the following composition was prepared, and surface treatment of the three types of the metal plate and the box was conducted by the surface treating method (2). The chemical conversion solution was prepared by adding the following components (A) to (I) to 80% of the total content of water in the order of (F), (A), (B), nitric acid, (D), (E), (H), and (I), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 15

(A): tin (II) nitrate, 0.5 mmol/L, copper nitrate, 1 mmol/L
(B): fluorozirconic acid, 4 mmol/L; fluorotitanic acid, 1 mmol/L
(C): nitrate radical from nitric acid, (A), (D), and (E), 15 mmol/L
(D): aluminum nitrate, 2 mmol/L
(E): zinc nitrate, 0.5 mmol/L
(F): total fluorine in hydrofluoric acid and (B), 40 mmol/L
(H): aminosilane coupling agent (A0876 manufactured by Tokyo Chemical Industry Co., Ltd.), 0.1 mmol/L
(I): nitrilotriacetic acid, 0.1 mmol/L
pH adjusted to 4.0 with ammonia solution
$C_F$ (minimum value) was calculated to be 27 mmol/L, and $C_F$ (maximum value) was calculated to be 49 mmol/L.

[Comparative Example 1]

Chemical conversion solution 16 having the following composition was prepared, and surface treatment of the three types of the metal plate and the box was conducted by the surface treating method (1) to form a chemical conversion film. The chemical conversion solution was prepared by adding the following components (B) to (F) to 80% of the total content of water in the order of (F), (B), (D), and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 16

(A): None
(B): fluorozirconic acid, 5 mmol/L
(C): nitrate radical from (D), 40.8 mmol/L
(D): magnesium nitrate, 20 mmol/L
(E): zinc sulfate, 0.4 mmol/L
(F): total fluorine (fluorine in (B)), 30 mmol/L
pH adjusted to 3.6 with ammonia solution
$C_F$ (minimum value) was calculated to be 60 mmol/L, and $C_F$ (maximum value) was calculated to be 115 mmol/L.

[Comparative Example 2]

Chemical conversion solution 16 having the following composition was prepared, and surface treatment of the three types of the metal plate and the box was conducted by the surface treating method (1) to form a chemical conversion film. The chemical conversion solution was prepared by adding the following components (B) to (E) to 80% of the total content of water in the order of (B) and (E), finally adding water to the predetermined volume, and stirring at room temperature for 20 minutes. The solution was heated to the predetermined temperature, and pH was adjusted. The surface treated metal plate was rinsed with water, and then with deionized water, and without drying, the metal plate was subjected to the electrodeposition by using the procedure and conditions as described above to thereby form the coating.

Chemical conversion solution 16

(A): None
(B): fluorotitanic acid, 1 mmol/L
(C): nitrate radical from (E), 10 mmol/L
(D): None
(E): zinc nitrate, 0.4 mmol/L
(F): total fluorine (fluorine in (B)), 10 mmol/L
pH adjusted to 2.3 with nitric acid
$C_F$ (minimum value) was calculated to be 4 mmol/L, and $C_F$ (maximum value) was calculated to be 7 mmol/L.

[Comparative Example 3]

2% aqueous solution of Alodine (registered trademark) 404 (a non-chromate chemical conversion solution corresponding to JP 2004-083824 A) was used. The surface treatment of the three types of the metal plate and the box was conducted by spraying this solution on their surface at 40°C for 30 seconds to thereby form a chemical conversion film. Next, the surface treated metal plates were rinsed with water, and then with deionized water, and without drying, the metal plate was subjected to the electrodeposition by using the procedure and conditions as described above to thereby form the coating.

[Comparative Example 4]

Chemical conversion solution 8 (corresponding to JP 2004-232047 A) comprising 2 g/l of hexacyanoferrate, 1 g/L of fluorotitanic acid, and 1 g/l of cobalt nitrate was prepared, and the three types of the metal plates were immersed in this solution at 40°C for 60 seconds to carry out the surface treatment to thereby form a chemical conversion film. Next, the surface treated metal plates were rinsed with water, and then with deionized water, and without drying, the metal plate was subjected to the electrodeposition by using the procedure and conditions as described above to thereby form the coating.

[Comparative Example 5]

A surface treating solution (corresponding to WO 03/074761 A1) containing (1) 1 mmol/L of titanium sulfate, (2) hydrofluoric acid of the amount corresponding to sixfold by mole of titanium sulfate, (3) 0.2 mmol/L of calcium nitrate, (4) 0.2 mmol/L of aluminum nitrate, and (5) nitrate ion (added in terms of (3) and (4)) was prepared, and the pH was adjusted to 3.8. The three types of the metal plates and the box were immersed in this solution at 40°C for 60 seconds to carry out the surface treatment to thereby form a chemical conversion film. Next, the surface treated metal plates were rinsed with water, and then with deionized water, and without drying, the metal plate was subjected to the electrodeposition by using the procedure and conditions as described above to thereby form the coating.

[Comparative Example 6]

1000 ppm by weight of zirconium (added as fluorozirconic acid), 1000 ppm by weight of zinc (added as zinc nitrate), 500 ppm by weight of magnesium (added as magnesium nitrate), 100 ppm by weight of titanium (added as fluorotitanic acid), 3 ppm by weight of indium (added as indium nitrate), and 800 ppm by weight of nitroguanidine were added to water in this order, and the mixture was stirred at room temperature to prepare the chemical conversion solution.

The pH was adjusted to 4.5 with ammonia solution. The three types of the metal plates and the box were immersed in this solution at 40°C for 60 seconds to carry out the surface treatment to thereby form a chemical conversion film (this process corresponds to Example 14 of JP 2004-218073 A). Next, the surface treated metal plates were rinsed with water, and then with deionized water, and without drying, the metal plate was subjected to the electrodeposition by using the procedure and conditions as described above to thereby form the coating.

[Comparative Example 7]

200 ppm by weight of zirconium (added as fluorozirconic acid), 500 ppm by weight of zinc (added as zinc nitrate), 200 ppm by weight of silica (added as Snowtex N), and 200 ppm by weight of ammonium persulfate were added to water in this order, and the mixture was stirred at room temperature to prepare the chemical conversion solution. The pH was adjusted to 4.0 with ammonia solution. The three types of the metal plates and the box were immersed in this solution at 40°C for 60 seconds to carry out the surface treatment to thereby form a chemical conversion film (this process corresponds to Example 3 of JP 2004-218073 A). Next, the surface treated metal plates were rinsed with water, and then with deionized water, and without drying, the metal plate was subjected to the electrodeposition by using the procedure and conditions as described above to thereby form the coating.

[Comparative Example 8]

500 ppm by weight of zirconium (added as fluorozirconic acid), 1000 ppm by weight of magnesium (added as magnesium nitrate), 500 ppm by weight of calcium (added as calcium nitrate), and 100 ppm by weight of sodium chlorate were added to water in this order, and the mixture was stirred at room temperature to prepare the chemical conversion solution. The pH was adjusted to 4.5 with ammonia solution. The three types of the metal plates and the box were immersed in this solution at 25°C for 60 seconds to carry out the surface treatment to thereby form a chemical conversion film (this process corresponds to Example 10 of JP 2004-218073 A). Next, the surface treated metal plates were rinsed with water, and then with deionized water, and without drying, the metal plate was subjected to the electrodeposition by using the procedure and conditions as described above to thereby form the coating.

[Comparative Example 9]

The three types of the metal plates and the box were immersed in 5% aqueous solution of PALBOND (registered trademark) L3020 (a zinc phosphate-based chemical conversion agent) at 35°C for 120 seconds to carry out the surface treatment to thereby form a chemical conversion film. Next, the surface treated metal plates were rinsed with water, and then with deionized water, and without drying, the metal plate was subjected to the electrodeposition by using the procedure and conditions as described above to thereby form the coating.

[Comparative Example 10]

Zirconium (500 ppm by weight of 40% zirconic acid in terms of the metal element), an additive for improving the coating adhesion (200 ppm by weight of 3-aminopropyltriethoxysilane ("KBE903" manufactured by Shin-Etsu Chemical Co., Ltd.) in terms of the effective component concentration), and a stabilizer (200 ppm by weight of HIDA (hydroxyethyl iminodiacetic acid)) were added, and the pH was adjusted to 4 with sodium hydroxide to prepare the chemical conversion solution. The KBE903 used was prepared by adding 5 parts by weight of KBE903 dropwise at a constant rate from a dropping funnel to a mixed solvent of 45 parts by mass of deionized water and 50 parts by mass of ethanol (at a solvent temperature of 25°C) for 60 minutes; allowing the mixture to react in nitrogen atmosphere at 25°C for 24 hours; and allowing the ethanol to evaporate by reducing the pressure of the reaction mixture to thereby obtain hydrolytic polycondensation product (hereinafter referred to as "KBE903 polycondensate A") of KBE903 with the effective component concentration of 5%. The resulting chemical conversion solution had an ORP (oxidation-reduction potential) of 308 mV, and the ratio of the content of the zirconium element to the total content of the silicon element in the aminosilane and/or its hydrolytic polycondensation product (i.e. Zr/Si ratio) was 20. The three types of the metal plates and the box were immersed in this solution at 40°C for 60 seconds to carry out the surface treatment to thereby form a chemical conversion film. Next, the surface treated metal plates were rinsed with water, and then with deionized water, and without drying, the metal plate was subjected to the electrodeposition by using the procedure and conditions as described above to thereby form the coating. (This procedure was conducted according to JP 2008-88553 A.)

[Comparative Example 11]

The chemical conversion solution was prepared by repeating the procedure of Comparative Example 10 except that the additive for improving the coating adhesion used was N-2-(aminoethyl)-3-aminopropyltrimethoxysilane ("KBM603" manufactured by Shin-Etsu Chemical Co., Ltd.) at an effective component concentration of 200 ppm by weight and the stabilizer used was 100 ppm by weight of aspartic acid, and the zirconium was used at 250 ppm by weight in terms of the metal element. The KBM603 used was the hydrolytic polycondensation product of KBM603 prepared by conducting the hydrolytic polycondensation by the procedure similar to that of Comparative Example 10 except that KBM603 was used instead of the KBE903 (hereinafter referred to as "KBM603 polycondensate"). The resulting chemical conversion solution had an ORP of 356 mV, and the Zr/Si ratio was 10. Surface treatment was conducted under the same conditions as described from the Comparative Example 11 to form the chemical conversion film. Next, the surface treated metal plates and the box were rinsed with water, and then with deionized water, and without drying, the metal plate was subjected to the electrodeposition by using the procedure and conditions as described above to thereby form the coating. (This procedure was conducted according to JP 2008-88553 A.)

[Comparative Example 12]

The coating was formed by electrodeposition after cleaning (degreasing) the metal plate without conducting the surface treatment.
The results for the tests and the evaluations of the chemical conversion films of Examples 1 to 15 and Comparative Examples 1 to 12 are shown in Tables 1 to 3. Table 1 shows the results for the cold rolled steel plate, Table 2 shows the results for the galvannealed steel plate, and Table 3 shows the results for the aluminum alloy plate. For all metal plates, the prior art techniques were insufficient in the throwing power during the coating by the electrodeposition except for the case using the phosphate. In the sludge generation test, precipitates were noted in many of the prior art techniques, and this would be a serious problem in the operability (production efficiency) in commercial scale production. In contrast, the chemical conversion solution and the surface treating method of the present invention have realized excellent throwing power in the coating by the electrodeposition simultaneously with high corrosion resistance and coating adhesion as well as favorable operability.

[Table 1]

Table 1: Cold rolled steel plate

| | Chemical conversion film | | | Electrodeposition | | | Coating performance | | Property of the chemical conversion solution | |
|---|---|---|---|---|---|---|---|---|---|---|
| | (A)Coating weight | (B)Coating weight | Thickness | Thickness (surface A) | Thickness (surface B) | A/G | Coating adhesion | Corrosion resistance | Initial | During the reaction |
| | mmol/m$^2$ | mmol/m$^2$ | nm | $\mu$m | $\mu$m | | | mm | | |
| E.1 | Sn:0.1 | Ti:0.8 | 60 | 21 | 9 | 2.3 | 100 | 2.2 | Transparent | Transparent |
| E.2 | Sn:0.3 | Ti:1.0 | 70 | 20 | 9 | 2.2 | 100 | 2.1 | Transparent | Transparent |
| E.3 | Ge:0.1 | Ti:0.2, Zr:0.6 | 40 | 20 | 10 | 2.0 | 100 | 1.9 | Transparent | Transparent |
| E.4 | Sn:0.3 | Zr:0.9 | 80 | 20 | 10 | 2.0 | 100 | 1.9 | Transparent | Transparent |
| E.5 | Sn:0.1, | Zr:0.8 | 70 | 20 | 9 | 2.2 | 100 | 2.0 | Transparent | Transparent |
| E.6 | Sn:0.3, | Zr:0.7 | 60 | 20 | 10 | 2.0 | 100 | 2.1 | Transparent | Transparent |
| E.7 | Sn:0.3, | Zr:0.7 | 60 | 20 | 10 | 2.0 | 100 | 2.0 | Transparent | Transparent |
| E.8 | Sn:0.3, | Zr:0.6 | 50 | 20 | 10 | 2.0 | 100 | 1.8 | Transparent | Transparent |
| E.9 | Sn:0.1, | Zr:0.7 | 60 | 20 | 9 | 2.2 | 100 | 1.8 | Transparent | Transparent |
| E.10 | Sn:0.2 | Zr:0.6 | 50 | 20 | 10 | 2.0 | 100 | 2.0 | Transparent | Transparent |
| E.11 | Sn:0.1 | Zr:0.6 | 40 | 20 | 11 | 1.8 | 100 | 2.0 | Transparent | Transparent |
| E.12 | Sn:0.2, | Ti:0.2, Zr:0.6 | 70 | 20 | 10 | 2.0 | 100 | 1.6 | Transparent | Transparent |
| E.13 | Sn:0.2, | Ti:0.2, Zr:0.7 | 80 | 20 | 11 | 1.8 | 100 | 1.6 | Transparent | Transparent |
| E.14 | Cu:0.3 | Zr:0.9 | 80 | 20 | 11 | 1.8 | 100 | 1.9 | Transparent | Transparent |
| E.15 | Sn:0.2, | Ti:0.2, Zr:0.7 | 80 | 20 | 11 | 1.8 | 100 | 1.6 | Transparent | Transparent |
| C.E.1 | - | Zr:0.5 | 40 | 27 | 2 | 13.5 | 100 | 2.3 | Transparent | Transparent |
| C.E.2 | - | Ti:0.2 | 10 | 28 | 2 | 14.0 | 99 | 4.5 | Transparent | Transparent |
| C.E.3 | - | Zr:0.2 | 20 | 28 | 2 | 14.0 | 95 | 4.0 | Transparent | Turbid (white) |
| C.E.4 | - | Ti:0.2 | 20 | 29 | 1 | 29.0 | 90 | 4.5 | Transparen t | Turbid (white) |
| C.E.5 | - | Ti:0.5 | 40 | 26 | 2 | 13.0 | 100 | 2.0 | Transparent | Transparent |
| C.E.6 | In:ND | Ti:ND, Zr:0.2 | 20 | 28 | 1 | 28.0 | 95 | 3.3 | Turbid (white) | Sludge |

(continued)

| | Chemical conversion film | | | Electrodeposition | | | Coating performance | | Property of the chemical conversion solution | |
|---|---|---|---|---|---|---|---|---|---|---|
| | (A)Coating weight | (B)Coating weight | Thickness | Thickness (surface A) | Thickness (surface B) | A/G | Coating adhesion | Corrosion resistance | Initial | During the reaction |
| | mmol/m$^2$ | mmol/m$^2$ | nm | $\mu$m | $\mu$m | | | mm | | |
| C.E.7 | - | Zr:0.2 | 20 | 27 | 1 | 27.0 | 99 | 3.0 | Slight turbid | Turbid (white) |
| C.E.8 | - | Zr:0.1 | 10 | 28 | 1 | 28.0 | 95 | 3.8 | Turbid (white) | Sludge |
| C.E.9 | - | - | 2000 | 20 | 10 | 2.0 | 100 | 3.0 | Transparent | Sludge |
| C.E.10 | - | Zr:0.56 | 40 | 25 | 6 | 4.2 | 95 | 3.0 | Turbid (white) | Sludge |
| C.E.11 | - | Zr:0.56 | 40 | 26 | 5 | 5.2 | 95 | 3.0 | Turbid (white) | Sludge |
| C.E.12 | - | - | - | 26 | 2 | 13.0 | 80 | 6.5 | - | - |

[Table 2]

Table 2: Galvannealed steel plate

| | Chemical conversion film | | | Electrodeposition | | | Coating performance | | Property of the chemical conversion solution | |
|---|---|---|---|---|---|---|---|---|---|---|
| | (A)Coating weight | (B)Coating weight | Thickness | Thickness (surface A) | Thickness (surface B) | A/G | Coating adhesion | Corrosion resistance | Initial | During the reaction |
| | mmol/m$^2$ | mmol/m$^2$ | Nm | μm | μm | | | Mm | | |
| E.1 | Sn:0.1 | Ti:0.4 | 30 | 20 | 9 | 2.2 | 100 | 1.0 | Transparent | Transparent |
| E.2 | Sn:0.2 | Ti:0.5 | 40 | 20 | 9 | 2.2 | 100 | 0.9 | Transparent | Transparent |
| E.3 | Ge:0.1 | Ti:0.1, Zr:0.4 | 40 | 20 | 11 | 1.8 | 100 | 1.0 | Transparent | Transparent |
| E.4 | Sn:0.2 | Zr:0.5 | 60 | 20 | 11 | 1.8 | 100 | 1.0 | Transparent | Transparent |
| E.5 | Sn:0.1, Ge:0.1 | Zr:0.6 | 50 | 19 | 9 | 2.1 | 100 | 1.0 | Transparent | Transparent |
| E.6 | Sn:0.2, Ge:0.1 | Zr:0.5 | 40 | 20 | 10 | 2.0 | 100 | 1.0 | Transparent | Transparent |
| E.7 | Sn:0.2, Ge:0.1 | Zr:0.7 | 50 | 20 | 11 | 1.8 | 100 | 1.0 | Transparent | Transparent |
| E.8 | Sn:0.3, Ge:0.1 | Zr:0.5 | 50 | 20 | 10 | 2.0 | 100 | 0.8 | Transparent | Transparent |
| E.9 | Sn:0.1, Ge:0.1 | Zr:0.5 | 40 | 20 | 10 | 2.0 | 100 | 0.8 | Transparent | Transparent |
| E.10 | Sn:0.1 | Zr:0.5 | 40 | 20 | 10 | 2.0 | 100 | 0.9 | Transparent | Transparent |
| E.11 | Sn:0.1 | Zr:0.4 | 30 | 20 | 11 | 1.8 | 100 | 0.9 | Transparent | Transparent |
| E.12 | Sn:0.2, Ge:0.1 | Ti:0.1, Zr:0.5 | 50 | 20 | 11 | 1.8 | 100 | 0.8 | Transparent | Transparent |
| E.13 | Sn:0.2, Ge:0.1 | Ti:0.1, Zr:0.5 | 50 | 20 | 11 | 1.8 | 100 | 0.7 | Transparent | Transparent |
| E.14 | Cu:0.2 | Zr:0.8 | 50 | 20 | 11 | 1.8 | 100 | 0.8 | Transparent | Transparent |
| E.15 | Sn:0.2, Cu:0.1 | Ti:0.1, Zr:0.5 | 50 | 20 | 11 | 1.8 | 100 | 0.7 | Transparent | Transparent |
| C.E.1 | - | Zr:0.4 | 30 | 25 | 3 | 8.3 | 100 | 1.2 | Transparent | Transparent |

(continued)

| | Chemical conversion film | | | Electrodeposition | | | Coating performance | | Property of the chemical conversion solution | |
|---|---|---|---|---|---|---|---|---|---|---|
| | (A)Coating weight | (B)Coating weight | Thickness | Thickness (surface A) | Thickness (surface B) | A/G | Coating adhesion | Corrosion resistance | Initial | During the reaction |
| | mmol/m$^2$ | mmol/m$^2$ | Nm | μm | μm | | | Mm | | |
| C.E.2 | - | Ti::0.1 | 5 | 25 | 2 | 12.5 | 99 | 2.0 | Transparent | Transparent |
| C.E.3 | - | Zr:0.2 | 10 | 24 | 3 | 8.0 | 96 | 2.0 | Transparent | Turbid (white) |
| C.E.4 | - | Ti:0.1 | 10 | 26 | 2 | 13.0 | 90 | 2.3 | Transparent | Turbid (white) |
| C.E.5 | - | Ti:0.3 | 20 | 23 | 2 | 11.5 | 100 | 1.1 | Transparent | Transparent |
| C.E.6 | In:ND | Ti:ND, Zr:0.2 | 15 | 25 | 2 | 12.5 | 95 | 1.6 | Turbid (white) | Sludge |
| C.E.7 | - | Zr:0.1 | 15 | 26 | 2 | 13.0 | 100 | 1.4 | Slightly turbid | Turbid (white) |
| C.E.8 | - | Zr:0.1 | 10 | 26 | 2 | 13.0 | 96 | 1.4 | Turbid (white) | Sludge |
| C.E.9 | - | - | 3500 | 20 | 10 | 2.0 | 100 | 1.2 | Transparent | Sludge |
| C.E.10 | - | Zr:0.5 | 35 | 24 | 6 | 4.0 | 100 | 1.1 | Turbid (white) | Sludge |
| C.E.11 | - | Zr:0.5 | 35 | 25 | 5 | 5.0 | 95 | 1.1 | Turbid (white) | Sludge |
| C.E.12 | - | - | - | 25 | 3 | 8.3 | 85 | 2.4 | - | - |

[Table 3]

Table 3: Aluminum plate

| | Chemical conversion film | | | Electrodeposition | | | Coating performance | | Property of the chemical conversion solution | |
|---|---|---|---|---|---|---|---|---|---|---|
| | (A)Coating weight | (B)Coating weight | Thickness | Thickness (surface A) | Thickness (surface B) | A/G | Coating adhesion | Corrosion resistance | Initial | During the reaction |
| | mmol/m$^2$ | mmol/m$^2$ | nm | $\mu$m | $\mu$m | | | Mm | | |
| E.1 | Sn:0.1 | Ti:0.3 | 15 | 20 | 10 | 2.0 | 100 | 0.3 | Transparent | Transparent |
| E.2 | Sn:0.1 | Ti:0.4 | 20 | 20 | 10 | 2.0 | 100 | 0.3 | Transparent | Transparent |
| E.3 | Ge:0.1 | Ti:0.1, Zr:0.3 | 40 | 20 | 11 | 1.8 | 100 | 0.2 | Transparent | Transparent |
| E.4 | Sn:0.2 | Zr:0.4 | 40 | 20 | 11 | 1.8 | 100 | 0.3 | Transparent | Transparent |
| E.5 | Sn:0.1, Ge:0.1 | Zr:0.4 | 40 | 19 | 10 | 1.9 | 100 | 0.2 | Transparent | Transparent |
| E.6 | Sn:0.2, Ge:0.1 | Zr:0.4 | 40 | 20 | 10 | 2.0 | 100 | 0.3 | Transparent | Transparent |
| E.7 | Sn:0.2, Ge:0.1 | Zr:0.5 | 40 | 20 | 10 | 2.0 | 100 | 0.3 | Transparent | Transparent |
| E.8 | Sn:0.2, Ge:0.1 | Zr:0.4 | 40 | 20 | 10 | 2.0 | 100 | 0.3 | Transparent | Transparent |
| E.9 | Sn:0.1, Ge:0.1 | Zr:0.4 | 40 | 20 | 10 | 2.0 | 100 | 0.3 | Transparent | Transparent |
| E.10 | Sn:0.1 | Zr:0.3 | 30 | 20 | 10 | 2.0 | 100 | 0.3 | Transparent | Transparent |
| E.11 | Sn:0.1 | Zr:0.3 | 20 | 20 | 11 | 1.8 | 100 | 0.3 | Transparent | Transparent |
| E.12 | Sn:0.1, Ge:0.1 | Ti:0.1, Zr:0.2 | 30 | 20 | 11 | 1.8 | 100 | 0.2 | Transparent | Transparent |
| E.13 | Sn:0.1, Ge:0.1 | Ti:0.1, Zr:0.3 | 40 | 20 | 11 | 1.8 | 100 | 0.2 | Transparent | Transparent |
| E.14 | Cu:0.1 | Zr:0.4 | 40 | 20 | 11 | 1.8 | 100 | 0.2 | Transparent | Transparent |
| E.15 | Sn:0.1, Cu:0.1 | Ti:0.1, Zr:0.3 | 50 | 20 | 11 | 1.8 | 100 | 0.2 | Transparent | Transparent |
| C.E.1 | - | Zr:0.2 | 20 | 24 | 5 | 4.8 | 100 | 0.9 | Transparent | Transparent |

(continued)

| | Chemical conversion film | | | Electrodeposition | | | Coating performance | | Property of the chemical conversion solution | |
|---|---|---|---|---|---|---|---|---|---|---|
| | (A)Coating weight | (B)Coating weight | Thickness | Thickness (surface A) | Thickness (surface B) | A/G | Coating adhesion | Corrosion resistance | Initial | During the reaction |
| | $mmol/m^2$ | $mmol/m^2$ | nm | μm | μm | | | Mm | | |
| C.E.2 | - | Ti::0.1 | 5 | 25 | 4 | 6.3 | 100 | 1.0 | Transparent | Transparent |
| C.E.3 | - | Zr:0.1 | 10 | 24 | 5 | 4.8 | 100 | 0.9 | Transparent | Turbid (white) |
| C.E.4 | - | Ti:0.1 | 10 | 26 | 4 | 6.5 | 100 | 0.8 | Transparent | Turbid (white) |
| C.E.5 | - | Zr:0.2 | 20 | 23 | 5 | 4.6 | 100 | 0.3 | Transparent | Transparent |
| C.E.6 | In:ND | Ti:ND, Zr:0.1 | 10 | 25 | 4 | 6.3 | 97 | 1.0 | Turbid (white) | Sludge |
| C.E.7 | - | Zr:0.1 | 10 | 26 | 4 | 6.5 | 100 | 0.9 | Slight turbid | Turbid (white) |
| C.E.8 | - | Zr:0.1 | 10 | 26 | 4 | 6.5 | 98 | 0.9 | Turbid (white) | Turbid (white) |
| C.E.9 | - | - | 3500 | 20 | 11 | 1.8 | 100 | 0.5 | Transparent | Sludge |
| C.E.1 0 | - | Zr:0.3 | 20 | 25 | 7 | 3.6 | 100 | 0.5 | Turbid (white) | Sludge |
| C.E.1 1 | - | Zr:0.3 | 20 | 26 | 6 | 4.3 | 100 | 0.4 | Turbid (white) | Sludge |
| C.E.12 | - | - | - | 25 | 4 | 6.3 | 85 | 1.0 | - | - |
| E.: Example, C.E.: Comparative example, ND: Not determined | | | | | | | | | | |

Brief Description of Drawing

[Fig. 1]

FIG. 1 is a schematic view showing the box (four metal plate-box test) used in evaluating the throwing power in the electrodeposition.

[Explanations of letters or numerals]

| | |
|---|---|
| 1 | box |
| 10 | hole |
| 12 | test plate (metal plate after the coating) No.1 (outside: Surface A) |
| 13 | test plate (metal plate after the coating)No.2 |
| 14 | test plate (metal plate after the coating)No.3 |
| 15 | test plate (metal plate after the coating) No.4 (inside: Surface G) |
| 21 | side plate |
| 22 | side plate |
| 23 | bottom plate |

**Claims**

1. A chemical conversion solution for a metal structure comprising

    (A) at least one compound selected from water-soluble germanium compound, water-soluble tin compound, and water-soluble copper compound
    (B) at least one compound selected from water-soluble titanium compound and water-soluble zirconium compound,
    (C) at least one water-soluble nitrate compound,
    (D) at least one compound selected from water-soluble aluminum compound and water-soluble magnesium compound,
    (E) at least one water-soluble zinc compound, and
    (F) at least one fluorine compound, wherein

    content ($C_A$) of at least one member selected from germanium, tin, and copper is 0.05 mmol/L to 10 mmol/L,
    content ($C_B$) of titanium and/or zirconium is 0.1 mmol/L to 10 mmol/L,
    content ($C_C$) of nitrate radical in the water-soluble nitrate compound (C) is 3 mmol/L to 300 mmol/L,
    content ($C_D$) of aluminum and/or magnesium is 1 mmol/L to 200 mmol/L,
    content ($C_E$) of zinc is 0.2 mmol/L to 20 mmol/L,
    content ($C_F$) of fluorine in the fluorine compound (F) satisfies the following equations:

$$C_F \text{ (minimum value)} = C_A \times 2 + C_B \times 4 + C_D \times 2$$

$$C_F \text{ (maximum value)} = C_A \times 4 + C_B \times 7 + C_D \times 4,$$

    and
    pH of the chemical conversion solution has been adjusted to the range of 2.5 to 4.4.

2. The chemical conversion solution for a metal structure according to claim 1, wherein the chemical conversion solution further comprises a cationic water-soluble resin (G).

3. The chemical conversion solution for a metal structure according to claim 1 or 2, wherein the chemical conversion solution further comprises a coupling agent (H).

4. The chemical conversion solution for a metal structure according to anyone of claims 1-3, wherein the chemical conversion solution further comprises a metal chelating agent (I).

5. The chemical conversion solution for a metal structure according to anyone of claims 1-4, wherein the compound (A) contains at least one member selected from germanium nitrate, germanium sulfate, germanium fluoride, tin nitrate, tin sulfate, tin fluoride, copper nitrate, copper sulfate, and copper fluoride.

6. The chemical conversion solution for a metal structure according to anyone of claims 1-5, wherein the compound (B) contains at least one member selected from titanium sulfate, titanium oxysulfate, titanium ammonium sulfate, titanium nitrate, titanium oxynitrate, titanium ammonium nitrate, fluorotitanic acid, fluorotitanate complex, zirconium sulfate, zirconium oxysulfate, zirconium ammonium sulfate, zirconium nitrate, zirconium oxynitrate, zirconium ammonium nitrate, fluorozirconic acid, and fluorozirconate complex.

7. The chemical conversion solution for a metal structure according to anyone of claims 1-6, wherein the compound (C) contains at least one member selected from germanium nitrate, tin nitrate, copper nitrate, titanium nitrate, zirconium nitrate, magnesium nitrate, calcium nitrate, aluminum nitrate, zinc nitrate, strontium nitrate, and manganese nitrate.

8. The chemical conversion solution for a metal structure according to anyone of claims 1-7, wherein the compound (D) contains at least one member selected from aluminum nitrate, aluminum sulfate, aluminum fluoride, magnesium nitrate, magnesium sulfate, and magnesium fluoride.

9. The chemical conversion solution for a metal structure according to anyone of claims 1-8, wherein the compound (E) contains at least one member selected from zinc nitrate and zinc sulfate

10. The chemical conversion solution for a metal structure according to anyone of claims 1-9, wherein the compound (F) contains at least one member selected from hydrofluoric acid, ammonium fluoride, germanium fluoride, tin fluoride, copper fluoride, fluorotitanic acid, fluorotitanate complex, fuluorozirconic acid, fluorozirconate complex, aluminium fluoride and magnesium fluoride.

11. The chemical conversion solution for a metal structure according to anyone of claims 2-10, wherein the cationic water-soluble resin (G) contains at least one member selected from amino group-containing water-soluble oligomer and water-soluble polymer, and content of the resin (G) is in the range of 0.001 mmol/L to 10 mmol/L.

12. The chemical conversion solution for a metal structure according to anyone of claims 3-11, wherein the coupling agent (H) contains at least one member selected from silicon-containing coupling agent and titanium-containing coupling agent, and content of the coupling agent (H) is 0.001 mmol/L to 10 mmol/L.

13. The chemical conversion solution for a metal structure according to anyone of claims 4-12, wherein the chelating agent (I) contains at least one member selected from oxalic acid, tartaric acid, citric acid, malic acid, organic phosphonic acid, nitrilotriacetic acid and ethylenediaminetetraacetic acid, and content of the chelating agent (I) is 0.001 mmol/L to 10 mmol/L.

14. The chemical conversion solution for a metal structure according to anyone of claims 1-13, wherein the metal structure is a transportation vehicle or its part constituted from at least one member selected from cold rolled steel plate, aluminum or aluminum alloy plate, zinc or zinc alloy plate, zinc-plated steel plate, and galvannealed steel plate, and the chemical conversion solution also contains metal ions dissolved from the metal structure.

15. A method for treating a surface of a metal structure comprising the steps of; - conducting chemical conversion of the metal structure by using the chemical conversion solution for a metal structure of claim 1 to form a chemical conversion film on the surface of the metal structure to a coating weight in terms of at least one member selected from germanium, tin, and copper of 0.01 mmol/m$^2$ to 1 mmol/m$^2$, and in terms of at least one member selected from titanium and zirconium of 0.02 mmol/m$^2$ to 2 mmol/m$^2$, and 2 to 200 nm in terms of thickness of the film rinsing the metal structure with water, and then, with deionized water, and without drying, subjecting the surface of the metal structure to electrodeposition.

【Fig. 1】

## INTERNATIONAL SEARCH REPORT

International application No.

PCT/JP2009/061859

### A. CLASSIFICATION OF SUBJECT MATTER
C23C22/34(2006.01)i

According to International Patent Classification (IPC) or to both national classification and IPC

### B. FIELDS SEARCHED

Minimum documentation searched (classification system followed by classification symbols)
C23C22/00-22/86

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)
WPI (C23C_022_34/ic)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-218073 A  (Nippon Paint Co., Ltd.),<br>05 August, 2004 (05.08.04),<br>Claims; Par. Nos. [0002] to [0009], [0048], [0054]<br>& US 2004/0187967 A1    & US 2008/0286470 A1<br>& EP 1433875 A1          & CA 2454029 A | 1<br>2-15 |
| Y | JP 2004-263252 A  (JFE Steel Corp.),<br>24 September, 2004 (24.09.04),<br>Claim 10; Par. Nos. [0076], [0115]<br>(Family: none) | 2-15 |
| Y | JP 2005-206888 A  (Nihon Parkerizing Co., Ltd.),<br>04 August, 2005 (04.08.05),<br>Claim 1; Par. No. [0046]<br>(Family: none) | 2-15 |

[X] Further documents are listed in the continuation of Box C.      [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 July, 2009 (10.07.09) | Date of mailing of the international search report<br>21 July, 2009 (21.07.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/061859

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-013252 A (Nihon Parkerizing Co., Ltd.), 15 January, 2003 (15.01.03), Claims 1, 3; Par. Nos. [0060], [0061] & US 2004/167266 A1 & EP 1426466 A1 & WO 2003/000953 A1 & CA 2451471 A | 2-15 |
| Y | JP 2001-240977 A (Nippon Paint Co., Ltd.), 04 September, 2001 (04.09.01), Claim 1 & US 2001/0054455 A1 & EP 1130133 A2 | 3-15 |
| Y | JP 08-170184 A (Nihon Parkerizing Co., Ltd.), 02 July, 1996 (02.07.96), Claims; Par. Nos. [0047], [0068], [0071] & US 5486316 A & GB 2241963 A & EP 413328 A1 & WO 1996/009363 A1 | 4-15 |
| Y | JP 05-195246 A (Nihon Parkerizing Co., Ltd.), 03 August, 1993 (03.08.93), Claim 1; Par. Nos. [0004], [0017] & US 5143562 A & WO 1993/009266 A1 | 4-15 |
| Y | JP 2005-194627 A (Sumitomo Metal Industries, Ltd.), 21 July, 2005 (21.07.05), Claims 1, 2; Par. Nos. [0027], [0028], [0046] (Family: none) | 4-15 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004083824 A
- JP 2004269942 A
- JP 52131937 A
- JP 57041376 A
- JP 56136978 A
- JP 2000199077 A
- JP 11036082 A
- JP 2004232047 A
- JP 2001247977 A
- WO 03074761 A1
- JP 2003313679 A
- JP 2003313681 A
- JP 2003171778 A
- JP 2004218070 A
- JP 2004218073 A
- JP 2004218075 A
- JP 61091369 A
- JP 1172406 A
- JP 1177379 A
- JP 1177380 A
- JP 2000608 A
- JP 2000609 A
- JP 2771110 B
- JP 2001303267 A
- JP 3333611 B
- JP 2000332575 A
- JP 2004010937 A
- JP 2004003019 A
- JP 3597542 B
- JP 3784400 B
- JP 5195244 A
- JP 2004238716 A
- JP 2008088551 A
- JP 2008088552 A
- JP 2008088553 A